(19) Europäisches Patentamt
European Patent Office
Office européen des brevets

(11) **EP 4 579 607 A1**

(12) **EUROPEAN PATENT APPLICATION**
published in accordance with Art. 153(4) EPC

(43) Date of publication:
**02.07.2025 Bulletin 2025/27**

(21) Application number: **23867412.1**

(22) Date of filing: **15.09.2023**

(51) International Patent Classification (IPC):
*G06V 10/40* *(2022.01)*

(52) Cooperative Patent Classification (CPC):
**G06N 3/0464; G06N 3/08; G06V 10/40;
G06V 10/80; G06V 10/82**

(86) International application number:
**PCT/CN2023/119076**

(87) International publication number:
**WO 2024/061123 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.09.2022 CN 202211152658**

(71) Applicant: **Huawei Technologies Co., Ltd.
Shenzhen, Guangdong 518129 (CN)**

(72) Inventors:
• **TANG, Yehui**
**Shenzhen, Guangdong 518129 (CN)**
• **HAN, Kai**
**Shenzhen, Guangdong 518129 (CN)**
• **GUO, Jianyuan**
**Shenzhen, Guangdong 518129 (CN)**
• **WANG, Yunhe**
**Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **IMAGE PROCESSING METHOD AND IMAGE PROCESSING RELATED DEVICE**

(57) In an image processing method, during processing of an input image, not only is information of each image block considered, but also a relationship between each image block and image blocks whose positions are correlated with that of the image block is considered. Because factors considered are relatively comprehensive, an obtained output image can have good quality. The method in this application is implemented by using an image processing model. The method includes: performing feature extraction on an input image to obtain a first feature map, where the input image includes N image blocks, and $N \geq 2$; aggregating at least two image blocks in the input image to obtain a second feature map, where positions of the at least two image blocks are correlated; and obtaining an output image based on the first feature map and the second feature map. An image processing related device is also provided.

```
┌─────────────────────────────────────┐
│ Perform feature extraction on an     │ 501
│ input image to obtain a first        │
│ feature map, where the input image   │
│ includes N image blocks, and N ≥ 2   │
└─────────────────────────────────────┘
                 │
                 ▼
┌─────────────────────────────────────┐
│ Aggregate at least two image blocks  │ 502
│ in the input image to obtain a       │
│ second feature map, where positions  │
│ of the at least two image blocks     │
│ are correlated                       │
└─────────────────────────────────────┘
                 │
                 ▼
┌─────────────────────────────────────┐
│ Obtain an output image based on the  │ 503
│ first feature map and the second     │
│ feature map                          │
└─────────────────────────────────────┘
```

FIG. 5

**Description**

This application claims priority to Chinese Patent Application No. 202211152658.5, filed with the China National Intellectual Property Administration on September 21, 2022, and entitled "IMAGE PROCESSING METHOD AND RELATED DEVICE THEREOF", which is incorporated herein by reference in its entirety.

## TECHNICAL FIELD

Embodiments of this application relate to the field of artificial intelligence (artificial intelligence, AI) technologies, and in particular, to an image processing method and a related device thereof.

## BACKGROUND

With rapid development of AI technologies, neural network models have been widely used in tasks such as computer vision, and have achieved great success. However, a neural network model has a large quantity of parameters, needs to bear huge computational costs in a task execution process, and is difficult to deploy on a device with limited computing power. Therefore, it is very important to design a lightweight neural network model.

Currently, the lightweight neural network model is usually constructed based on a convolutional layer. Specifically, after obtaining an input image, the neural network model may perform lightweight feature extraction on the input image, and an obtained feature map may be used as a final output image. It can be learned that the neural network model primarily performs lightweight feature extraction operations during image processing, so that a quantity of parameters of the model and computational costs that need to be borne can be reduced.

However, due to the nature of lightweight feature extraction, when the neural network model performs lightweight feature extraction on each image block in the input image, only information of each image block is usually considered. Because factors considered are relatively limited, the output image obtained by using the model cannot have good quality.

## SUMMARY

Embodiments of this application provide an image processing method and a related device thereof. During processing of an input image, not only is information of each image block considered, but also a relationship between each image block and image blocks whose positions are correlated with that of the image block is considered. Because factors considered are relatively comprehensive, an obtained output image can have good quality.

A first aspect of embodiments of this application provides an image processing method. The method includes: When a to-be-processed image needs to be processed, the to-be-processed image may be input into an image processing model as an input image. In this case, the image processing model may perform lightweight feature extraction on the input image to obtain a first feature map. In a possible implementation, in the image processing model, the input image may be divided into N image blocks (N is a positive integer greater than or equal to 2). For any one of the N image blocks, that is, for an $i^{th}$ image block (i = 1, ..., N) in the N image blocks, the image processing model may perform lightweight feature extraction processing on the $i^{th}$ image block to obtain an $i^{th}$ feature block in the first feature map. For other image blocks than the $i^{th}$ image block in the N image blocks, the image processing model may also perform the same operation on the other image blocks as on the $i^{th}$ image block. In this way, a total of N feature blocks of the first feature map can be obtained, which is equivalent to obtaining the first feature map.

In addition, because the input image may be divided into the N image blocks, the image processing model may further aggregate at least two images in the N image blocks to obtain a second feature map, where positions of the at least two images in the input image are correlated. In a possible implementation, for the $i^{th}$ image block in the N image blocks, the image processing model may first determine, in the other image blocks than the $i^{th}$ image block in the N image blocks, M image blocks (M is a positive integer greater than or equal to 1, and M is less than N) forming a preset position relationship with the $i^{th}$ image block, and then the image processing model may aggregate the $i^{th}$ image block and the M image blocks to obtain an $i^{th}$ feature block in the second feature map. For the other image blocks than the $i^{th}$ image block in the N image blocks, the image processing model may also perform the same operation on the other image blocks as on the $i^{th}$ image block. In this way, a total of N feature blocks of the second feature map can be obtained, which is equivalent to obtaining the second feature map.

After obtaining the first feature map and the second feature map, the image processing model may further process the first feature map and the second feature map to obtain an output image. The output image is a processed image, that is, an output of the entire image processing model.

As can be learned from the foregoing method, after obtaining the input image including the N image blocks, the image processing model may perform feature extraction on the input image to obtain the first feature map. In addition, the image processing model may further aggregate the at least two image blocks in the input image to obtain the second feature map. Finally, the image processing model may process the first feature map and the second feature map to obtain the output image. In the foregoing process, the first feature map may be used to indicate information of each image block in the input image, and the second feature map may be used to indicate a relationship between one image block (or some or all image blocks) in the input image and image blocks whose positions are correlated with that of the image block. As can be learned, because factors considered in the process of obtaining the output image by the image processing model are relatively comprehensive, the output image obtained by the image processing model can have good quality.

More specifically, after obtaining the input image including the N image blocks, the image processing model may perform feature extraction on the input image to obtain the first feature map. In addition, the image processing model may further aggregate the $i^{th}$ image block in the input image and the M image blocks other than the $i^{th}$ image block in the input image to obtain the $i^{th}$ feature block in the second feature map, where the M image blocks include image blocks forming a preset position relationship with the $i^{th}$ image block. For the other image blocks than the $i^{th}$ image block in the input image, the image processing model may also perform similar operations. Therefore, the N feature blocks of the second feature map, that is, the second feature map, can be obtained. Finally, the image processing model may process the first feature map and the second feature map to obtain the output image. In the foregoing process, for any image block in the input image, the first feature map includes a feature (that is, a feature of each image block) obtained by the image processing model by performing feature extraction on the image block, and the second feature map includes a feature (that is, a long attention feature of each image block) obtained by the image processing model by aggregating the image block and several image blocks that have a preset position relationship with the image block. As can be learned, in the process of obtaining the output image based on the first feature map and the second feature map by the image processing model, not only is the information of each image block in the input image considered, but also a relationship between each image block and the image blocks whose positions are correlated with that of the image block is considered. Because the factors considered are relatively comprehensive, the output image obtained by the image processing model can have good quality.

In a possible implementation, the M image blocks include at least one of the following: an image block located in a same row as the $i^{th}$ image block, an image block located in a same column as the $i^{th}$ image block, an image block forming an oblique line with the $i^{th}$ image block, and an image block located around the $i^{th}$ image block.

In the foregoing implementation, the M image blocks forming the preset position relationship with the $i^{th}$ image block may be presented in a plurality of manners. For example, the M image blocks may be image blocks located in the same row as the $i^{th}$ image block. For another example, the M image blocks may be image blocks located in the same column as the $i^{th}$ image block. For another example, the M image blocks may be image blocks forming an oblique line with the $i^{th}$ image block. For another example, the M image blocks may be image blocks located around the $i^{th}$ image block. For another example, one part of the M image blocks may be image blocks located in the same row as the $i^{th}$ image block, and the other part may be image blocks located in the same column as the $i^{th}$ image block.

In a possible implementation, the aggregating the $i^{th}$ image block in the input image and the M image blocks other than the $i^{th}$ image block in the input image to obtain the $i^{th}$ feature block in the second feature map includes: performing weighted summation on the $i^{th}$ image block in the input image and the M image blocks other than the $i^{th}$ image block in the input image to obtain the $i^{th}$ feature block in the second feature map. In the foregoing implementation, because the input image may be divided into the N image blocks, for the $i^{th}$ image block in the N image blocks, the image processing model may perform weighted summation on the $i^{th}$ image block in the input image and the M image blocks forming the preset position relationship with the $i^{th}$ image block, to obtain the $i^{th}$ feature block in the second feature map. For the other image blocks than the $i^{th}$ image block in the N image blocks, the image processing model may also perform the same operation on the other image blocks as on the $i^{th}$ image block. In this way, a total of N feature blocks of the second feature map can be obtained, which is equivalent to obtaining the second feature map. As can be learned, in this implementation, the second feature map including the long attention feature of each image block in the input image may be obtained in a weighted summation manner. It can be learned that the second feature map may be used to indicate the relationship between each image block and the image blocks whose positions are correlated with that of the image block.

In a possible implementation, the obtaining the output image based on the first feature map and the second feature map includes: fusing the first feature map and the second feature map to obtain a third feature map; performing feature extraction on the third feature map to obtain a fourth feature map; and fusing the fourth feature map and the input image to obtain the output image. In the foregoing implementation, after obtaining the first feature map and the second feature map, the image processing model may perform fusion (for example, addition or multiplication) on the first feature map and the second feature map to obtain the third feature map. After obtaining the third feature map, the image processing model may perform feature extraction (for example, 1x1 convolution) on the third feature map to obtain the fourth feature map. After obtaining the fourth feature map, the image processing model performs fusion (for example, addition or multiplication) on the fourth feature map and the input image to obtain the output image.

In a possible implementation, the obtaining the output image based on the first feature map and the second feature map includes: fusing the first feature map and the second feature map to obtain the output image. In the foregoing implementation, after obtaining the first feature map and the second feature map, the image processing model may perform fusion (for example, addition or multiplication) on the first feature map and the second feature map, and a fusion result may be directly used as the output image.

In a possible implementation, before the obtaining the output image based on the first feature map and the second feature map, the method further includes: normalizing the second feature map to obtain a normalized second feature map; and the obtaining the output image based on the first feature map and the second feature map includes: obtaining the output image based on the first feature map and the normalized second feature map. In the foregoing implementation, the image processing model may further normalize the second feature map to obtain the normalized second feature map. Therefore, the image processing model can process the first feature map and the normalized second feature map to obtain the output image.

In a possible implementation, the input image is a raw to-be-processed image, or the input image is a feature map obtained after feature extraction is performed on the to-be-processed image. In the foregoing implementation, the input image of the image processing model may be a to-be-processed image selected by a user (in this case, the $i^{th}$ image block in the input image may also be understood as an $i^{th}$ image block in the to-be-processed image, and the same applies to other image blocks in the input image, which is not described herein), or may be a feature map obtained after feature extraction (the feature extraction is an operation performed by a model other than the image processing model) is performed in advance on a to-be-processed image selected by a user. (In this case, the $i^{th}$ image block in the input image may also be understood as an $i^{th}$ feature block in a feature map of the to-be-processed image, and the same applies to other image blocks in the input image, which is not described herein.)

A second aspect of embodiments of this application provides an image processing method. The method is implemented by using an image processing model. The method includes:

When a to-be-processed image needs to be processed, the to-be-processed image may be input into the image processing model as an input image. In the image processing model, the input image may be divided into N image blocks (N is a positive integer greater than or equal to 2). For any one of the N image blocks, that is, for an $i^{th}$ image block (i = 1, ..., N) in the N image blocks, the image processing model may perform lightweight feature extraction processing on the $i^{th}$ image block to obtain an $i^{th}$ feature block in a first feature map. For other image blocks than the $i^{th}$ image block in the N image blocks, the image processing model may also perform the same operation on the other image blocks as on the $i^{th}$ image block. In this way, a total of N feature blocks of the first feature map can be obtained, which is equivalent to obtaining the first feature map.

In addition, the image processing model may further perform downsampling on the input image to obtain a downsampled input image. It should be noted that a size of the downsampled input image is usually less than that of the input image. Therefore, the downsampled input image includes P image blocks, where N > P ≥ 2.

Because the downsampled input image may be divided into the P image blocks, the image processing model may further aggregate at least two images in the P image blocks to obtain a second feature map, where positions of the at least two images in the input image are correlated. In a possible implementation, for a $j^{th}$ image block in the P image blocks, the image processing model may first determine, in other image blocks than the $j^{th}$ image block in the P image blocks, Q image blocks (Q is a positive integer greater than or equal to 1, and Q is less than P) forming a preset position relationship with the $j^{th}$ image block, and then the image processing model may aggregate the $j^{th}$ image block and the Q image blocks to obtain a $j^{th}$ feature block in the second feature map. For the other image blocks than the $j^{th}$ image block in the P image blocks, the image processing model may also perform the same operation on the other image blocks as on the $j^{th}$ image block. In this way, a total of P feature blocks of the second feature map can be obtained, which is equivalent to obtaining the second feature map.

After obtaining the second feature map, the image processing model may perform upsampling on the second feature map to obtain an upsampled second feature map. It should be noted that a size of the upsampled second feature map is usually equal to that of the input image. Therefore, the upsampled second feature map includes N feature blocks.

After obtaining the first feature map and the upsampled second feature map, the image processing model may process the first feature map and the upsampled second feature map to obtain an output image. The output image is a processed image, that is, an output of the entire image processing model.

As can be learned from the foregoing method, after obtaining the input image including the N image blocks, the image processing model may perform feature extraction on the input image to obtain the first feature map. In addition, the image processing model may further perform downsampling on the input image to obtain the downsampled input image, and then the image processing model may aggregate the at least two image blocks in the downsampled input image to obtain the second feature map. Then the image processing model may perform upsampling on the second feature map to obtain the upsampled second feature map. Finally, the image processing model may process the first feature map and the upsampled second feature map to obtain the output image. In the foregoing process, the first feature map may be used to indicate information of each image block in the input image, and the upsampled second feature map may be used to indicate a relationship between one image block (or some or all image blocks) in the input image and image blocks whose positions are correlated with that of the image block. As can be learned, because factors considered in the process of obtaining the output image by the image processing model are relatively comprehensive, the output image obtained by the image processing model can have good quality.

More specifically, after obtaining the input image including the N image blocks, the image processing model may perform feature extraction on the input image to obtain the first feature map. In addition, the image processing model may further first perform downsampling on the input image to obtain the downsampled input image including the P image blocks. Then the image processing model may aggregate the $j^{th}$ image block in the downsampled input image and the Q image blocks other than the $j^{th}$ image block in the downsampled input image to obtain the $j^{th}$ feature block in the second feature map, where the Q image blocks include image blocks forming a preset position relationship with the $i^{th}$ image block. For the other image blocks than the $j^{th}$ image block in the downsampled input image, the image processing model may also perform similar operations. Therefore, the P feature blocks of the second feature map, that is, the second feature map, can be obtained. Then the image processing model may perform upsampling on the second feature map to obtain the upsampled second feature map including the N feature blocks. Finally, the image processing model may process the first feature map and the upsampled second feature map to obtain the output image. In the foregoing process, for any image block in the input image, the first feature map includes a feature obtained by the image processing model by performing feature extraction on the image block, and the upsampled second feature map includes a feature obtained by the image processing model by aggregating the image block and several image blocks that have a preset position relationship with the image block. As can be learned, in the process of obtaining the output image based on the first feature map and the upsampled second feature map by the image processing model, not only is the information of each image block in the input image considered, but also a relationship between each image block and the image blocks whose positions are correlated with that of the image block is considered. Because the factors considered are relatively comprehensive, the output image obtained by the image processing model can have good quality.

In a possible implementation, the P image blocks include at least one of the following: an image block located in a same row as the $j^{th}$ image block, an image block located in a same column as the $j^{th}$ image block, an image block forming an oblique line with the $j^{th}$ image block, and an image block located around the $j^{th}$ image block.

In a possible implementation, the aggregating the $j^{th}$ image block in the downsampled input image and the Q image blocks other than the $j^{th}$ image block in the downsampled input image to obtain the $j^{th}$ feature block in the second feature map includes: performing weighted summation on the $j^{th}$ image block in the downsampled input image and the Q image blocks other than the $j^{th}$ image block in the downsampled input image to obtain the $j^{th}$ feature block in the second feature map.

In a possible implementation, the obtaining the output image based on the first feature map and the upsampled second feature map includes: fusing the first feature map and the upsampled second feature map to obtain a third feature map; performing feature extraction on the third feature map to obtain a fourth feature map; and fusing the fourth feature map and the input image to obtain the output image.

In a possible implementation, the obtaining the output image based on the first feature map and the upsampled second feature map includes: fusing the first feature map and the upsampled second feature map to obtain the output image.

In a possible implementation, before the obtaining the output image based on the first feature map and the upsampled second feature map, the method further includes: normalizing the upsampled second feature map to obtain a normalized second feature map; and the obtaining the output image based on the first feature map and the upsampled second feature map includes: obtaining the output image based on the first feature map and the normalized second feature map.

A third aspect of embodiments of this application provides a model training method. The method includes: processing an input image by using a to-be-trained model to obtain an output image, where the to-be-trained model is configured to: perform feature extraction on the input image to obtain a first feature map, where the input image includes N image blocks, and N ≥ 2; aggregate at least two image blocks in the input image to obtain a second feature map, where positions of the at least two image blocks are correlated; and obtain the output image based on the first feature map and the second feature map; obtaining a target loss based on the output image and a real output image, where the target loss indicates a difference between the output image and the real output image; and updating a parameter of the to-be-trained model based on the target loss until a model training condition is met, to obtain an image processing model.

The image processing model obtained through training in embodiments of this application has an image processing capability. Specifically, after obtaining an input image including N image blocks, the image processing model may perform feature extraction on the input image to obtain a first feature map. In addition, the image processing model may further aggregate at least two image blocks in the input image to obtain a second feature map. Finally, the image processing model may process the first feature map and the second feature map to obtain an output image. In the foregoing process, the first feature map may be used to indicate information of each image block in the input image, and the second feature map may be used to indicate a relationship between one image block (or some or all image blocks) in the input image and image blocks whose positions are correlated with that of the image block. As can be learned, because factors considered in the process of obtaining the output image by the image processing model are relatively comprehensive, the output image obtained by the image processing model can have good quality.

In a possible implementation, the to-be-trained model is configured to aggregate an $i^{th}$ image block in the input image and M image blocks other than the $i^{th}$ image block in the input image to obtain an $i^{th}$ feature block in the second feature map, where the M image blocks include image blocks forming a preset position relationship with the $i^{th}$ image block, $N > M \geq 1$, and $i = 1, ..., N$.

In a possible implementation, the M image blocks include at least one of the following: an image block located in a same row as the $i^{th}$ image block, an image block located in a same column as the $i^{th}$ image block, an image block forming an oblique line with the $i^{th}$ image block, and an image block located around the $i^{th}$ image block.

In a possible implementation, the to-be-trained model is configured to perform weighted summation on the $i^{th}$ image block in the input image and the M image blocks other than the $i^{th}$ image block in the input image to obtain the $i^{th}$ feature block in the second feature map.

In a possible implementation, the to-be-trained model is configured to: fuse the first feature map and the second feature map to obtain a third feature map; perform feature extraction on the third feature map to obtain a fourth feature map; and fuse the fourth feature map and the input image to obtain the output image.

In a possible implementation, the to-be-trained model is configured to fuse the first feature map and the second feature map to obtain the output image.

In a possible implementation, the to-be-trained model is further configured to normalize the second feature map to obtain a normalized second feature map; and the to-be-trained model is configured to obtain the output image based on the first feature map and the normalized second feature map.

A fourth aspect of embodiments of this application provides a model training method. The method includes: processing an input image by using a to-be-trained model to obtain an output image, where the to-be-trained model is configured to: perform feature extraction on the input image to obtain a first feature map; perform downsampling on the input image to obtain a downsampled input image, where the downsampled input image includes P image blocks, and $P \geq 2$; aggregate at least two image blocks in the downsampled input image to obtain a second feature map, where positions of the at least two image blocks are correlated; perform upsampling on the second feature map to obtain an upsampled second feature map; and obtain the output image based on the first feature map and the upsampled second feature map; obtaining a target loss based on the output image and a real output image, where the target loss indicates a difference between the output image and the real output image; and updating a parameter of the to-be-trained model based on the target loss until a model training condition is met, to obtain an image processing model.

The image processing model obtained through training in embodiments of this application has an image processing capability. Specifically, after obtaining an input image including N image blocks, the image processing model may perform feature extraction on the input image to obtain a first feature map. In addition, the image processing model may further perform downsampling on the input image to obtain a downsampled input image, and then the image processing model may aggregate at least two image blocks in the downsampled input image to obtain a second feature map. Then the image processing model may perform upsampling on the second feature map to obtain an upsampled second feature map. Finally, the image processing model may process the first feature map and the upsampled second feature map to obtain an output image. In the foregoing process, the first feature map may be used to indicate information of each image block in the input image, and the upsampled second feature map may be used to indicate a relationship between one image block (or some or all image blocks) in the input image and image blocks whose positions are correlated with that of the image block. As can be learned, because factors considered in the process of obtaining the output image by the image processing model are relatively comprehensive, the output image obtained by the image processing model can have good quality.

In a possible implementation, the to-be-trained model is configured to aggregate a $j^{th}$ image block in the downsampled input image and Q image blocks other than the $j^{th}$ image block in the downsampled input image to obtain a $j^{th}$ feature block in the second feature map, where the Q image blocks include image blocks forming a preset position relationship with the $j^{th}$ image block, $P > Q \geq 1$, and $j = 1, ..., P$.

In a possible implementation, the P image blocks include at least one of the following: an image block located in a same row as the $j^{th}$ image block, an image block located in a same column as the $j^{th}$ image block, an image block forming an oblique line with the $j^{th}$ image block, and an image block located around the $j^{th}$ image block.

In a possible implementation, the to-be-trained model is configured to perform weighted summation on the $j^{th}$ image block in the downsampled input image and the Q image blocks other than the $j^{th}$ image block in the downsampled input image to obtain the $j^{th}$ feature block in the second feature map.

In a possible implementation, the to-be-trained model is configured to: fuse the first feature map and the upsampled second feature map to obtain a third feature map; perform feature extraction on the third feature map to obtain a fourth feature map; and fuse the fourth feature map and the input image to obtain the output image.

In a possible implementation, the to-be-trained model is configured to fuse the first feature map and the upsampled second feature map to obtain the output image.

In a possible implementation, the to-be-trained model is further configured to normalize the upsampled second feature map to obtain a normalized second feature map; and the to-be-trained model is configured to obtain the output image based on the first feature map and the normalized second feature map.

A fifth aspect of embodiments of this application provides an image processing apparatus. The apparatus includes an image processing model. The apparatus includes: a feature extraction module, configured to perform feature extraction on an input image to obtain a first feature map, where the input image includes N image blocks, and $N \geq 2$; an aggregation module, configured to aggregate at least two image blocks in the input image to obtain a second feature map, where positions of the at least two image blocks are correlated; and an obtaining module, configured to obtain an output image based on the first feature map and the second feature map.

In a possible implementation, the aggregation module is configured to aggregate an $i^{th}$ image block in the input image and M image blocks other than the $i^{th}$ image block in the input image to obtain an $i^{th}$ feature block in the second feature map, where the M image blocks include image blocks forming a preset position relationship with the $i^{th}$ image block, $N > M \geq 1$, and $i = 1, ..., N$.

In a possible implementation, the M image blocks include at least one of the following: an image block located in a same row as the $i^{th}$ image block, an image block located in a same column as the $i^{th}$ image block, an image block forming an oblique line with the $i^{th}$ image block, and an image block located around the $i^{th}$ image block.

In a possible implementation, the aggregation module is configured to perform weighted summation on the $i^{th}$ image block in the input image and the M image blocks other than the $i^{th}$ image block in the input image to obtain the $i^{th}$ feature block in the second feature map.

In a possible implementation, the obtaining module is configured to: fuse the first feature map and the second feature map to obtain a third feature map; perform feature extraction on the third feature map to obtain a fourth feature map; and fuse the fourth feature map and the input image to obtain the output image.

In a possible implementation, the obtaining module is configured to fuse the first feature map and the second feature map to obtain the output image.

In a possible implementation, the apparatus further includes a normalization module, configured to normalize the second feature map to obtain a normalized second feature map; and the obtaining module is configured to obtain the output image based on the first feature map and the normalized second feature map.

A sixth aspect of embodiments of this application provides an image processing apparatus. The apparatus includes an image processing model. The apparatus includes: a feature extraction module, configured to perform feature extraction on an input image to obtain a first feature map; a downsampling module, configured to perform downsampling on the input image to obtain a downsampled input image, where the downsampled input image includes P image blocks, and $P \geq 2$; an aggregation module, configured to aggregate at least two image blocks in the downsampled input image to obtain a second feature map, where positions of the at least two image blocks are correlated; an upsampling module, configured to perform upsampling on the second feature map to obtain an upsampled second feature map; and an obtaining module, configured to obtain an output image based on the first feature map and the upsampled second feature map.

In a possible implementation, the aggregation module is configured to aggregate a $j^{th}$ image block in the downsampled input image and Q image blocks other than the $j^{th}$ image block in the downsampled input image to obtain a $j^{th}$ feature block in the second feature map, where the Q image blocks include image blocks forming a preset position relationship with the $j^{th}$ image block, $P > Q \geq 1$, and $j = 1, ..., P$.

In a possible implementation, the P image blocks forming a preset position relationship with the $j^{th}$ image block include at least one of the following: an image block located in a same row as the $j^{th}$ image block, an image block located in a same column as the $j^{th}$ image block, an image block forming an oblique line with the $j^{th}$ image block, and an image block located around the $j^{th}$ image block.

In a possible implementation, the aggregation module is configured to perform weighted summation on the $j^{th}$ image block in the downsampled input image and the Q image blocks other than the $j^{th}$ image block in the downsampled input image to obtain the $j^{th}$ feature block in the second feature map.

In a possible implementation, the obtaining module is configured to: fuse the first feature map and the upsampled second feature map to obtain a third feature map; perform feature extraction on the third feature map to obtain a fourth feature map; and fuse the fourth feature map and the input image to obtain the output image.

In a possible implementation, the obtaining module is configured to fuse the first feature map and the upsampled second feature map to obtain the output image.

In a possible implementation, the apparatus further includes a normalization module, configured to normalize the upsampled second feature map to obtain a normalized second feature map; and the obtaining module is configured to obtain the output image based on the first feature map and the normalized second feature map.

A seventh aspect of embodiments of this application provides a model training apparatus. The apparatus includes: a processing module, configured to process an input image by using a to-be-trained model to obtain an output image, where the to-be-trained model is configured to: perform feature extraction on the input image to obtain a first feature map, where the input image includes N image blocks, and $N \geq 2$; aggregate at least two image blocks in the input image to obtain a second feature map, where positions of the at least two image blocks are correlated; and obtain the output image based on the first feature map and the second feature map; an obtaining module, configured to obtain a target loss based on the output image and a real output image, where the target loss indicates a difference between the output image and the real output image; and an updating module, configured to update a parameter of the to-be-trained model based on the target loss until a model training condition is met, to obtain an image processing model.

In a possible implementation, the to-be-trained model is configured to aggregate an $i^{th}$ image block in the input image and M image blocks other than the $i^{th}$ image block in the input image to obtain an $i^{th}$ feature block in the second feature map, where the M image blocks include image blocks forming a preset position relationship with the $i^{th}$ image block, $N > M \geq 1$, and i = 1, ..., N.

In a possible implementation, the M image blocks include at least one of the following: an image block located in a same row as the $i^{th}$ image block, an image block located in a same column as the $i^{th}$ image block, an image block forming an oblique line with the $i^{th}$ image block, and an image block located around the $i^{th}$ image block.

In a possible implementation, the to-be-trained model is configured to perform weighted summation on the $i^{th}$ image block in the input image and the M image blocks other than the $i^{th}$ image block in the input image to obtain the $i^{th}$ feature block in the second feature map.

In a possible implementation, the to-be-trained model is configured to: fuse the first feature map and the second feature map to obtain a third feature map; perform feature extraction on the third feature map to obtain a fourth feature map; and fuse the fourth feature map and the input image to obtain the output image.

In a possible implementation, the to-be-trained model is configured to fuse the first feature map and the second feature map to obtain the output image.

In a possible implementation, the to-be-trained model is further configured to normalize the second feature map to obtain a normalized second feature map; and the to-be-trained model is configured to obtain the output image based on the first feature map and the normalized second feature map.

An eighth aspect of embodiments of this application provides a model training apparatus. The apparatus includes: a processing module, configured to process an input image by using a to-be-trained model to obtain an output image, where the to-be-trained model is configured to: perform feature extraction on the input image to obtain a first feature map; perform downsampling on the input image to obtain a downsampled input image, where the downsampled input image includes P image blocks, and $P \geq 2$; aggregate at least two image blocks in the downsampled input image to obtain a second feature map, where positions of the at least two image blocks are correlated; perform upsampling on the second feature map to obtain an upsampled second feature map; and obtain the output image based on the first feature map and the upsampled second feature map; an obtaining module, configured to obtain a target loss based on the output image and a real output image, where the target loss indicates a difference between the output image and the real output image; and an updating module, configured to update a parameter of the to-be-trained model based on the target loss until a model training condition is met, to obtain an image processing model.

In a possible implementation, the to-be-trained model is configured to aggregate a $j^{th}$ image block in the downsampled input image and Q image blocks other than the $j^{th}$ image block in the downsampled input image to obtain a $j^{th}$ feature block in the second feature map, where the Q image blocks include image blocks forming a preset position relationship with the $j^{th}$ image block, $P > Q \geq 1$, and j = 1, ..., P.

In a possible implementation, the P image blocks include at least one of the following: an image block located in a same row as the $j^{th}$ image block, an image block located in a same column as the $j^{th}$ image block, an image block forming an oblique line with the $j^{th}$ image block, and an image block located around the $j^{th}$ image block.

In a possible implementation, the to-be-trained model is configured to perform weighted summation on the $j^{th}$ image block in the downsampled input image and the Q image blocks other than the $j^{th}$ image block in the downsampled input image to obtain the $j^{th}$ feature block in the second feature map.

In a possible implementation, the to-be-trained model is configured to: fuse the first feature map and the upsampled second feature map to obtain a third feature map; perform feature extraction on the third feature map to obtain a fourth feature map; and fuse the fourth feature map and the input image to obtain the output image.

In a possible implementation, the to-be-trained model is configured to fuse the first feature map and the upsampled second feature map to obtain the output image.

In a possible implementation, the to-be-trained model is further configured to normalize the upsampled second feature map to obtain a normalized second feature map; and the to-be-trained model is configured to obtain the output image based on the first feature map and the normalized second feature map.

A ninth aspect of embodiments of this application provides an image processing apparatus. The apparatus includes a memory and a processor. The memory stores code, and the processor is configured to execute the code. When the code is executed, the image processing apparatus performs the method according to any one of the first aspect, the possible implementations of the first aspect, the second aspect, or the possible implementations of the second aspect.

A tenth aspect of embodiments of this application provides a model training apparatus. The apparatus includes a memory and a processor. The memory stores code, and the processor is configured to execute the code. When the code is executed, the model training apparatus performs the method according to any one of the third aspect, the possible implementations of the third aspect, the fourth aspect, or the possible implementations of the fourth aspect.

An eleventh aspect of embodiments of this application provides a circuit system. The circuit system includes a processing circuit. The processing circuit is configured to perform the method according to any one of the first aspect, the possible implementations of the first aspect, the second aspect, the possible implementations of the second aspect, the third aspect, the possible implementations of the third aspect, the fourth aspect, or the possible implementations of the fourth aspect.

A twelfth aspect of embodiments of this application provides a chip system. The chip system includes a processor, configured to invoke a computer program or computer instructions stored in a memory, so that the processor performs the method according to any one of the first aspect, the possible implementations of the first aspect, the second aspect, the possible implementations of the second aspect, the third aspect, the possible implementations of the third aspect, the fourth aspect, or the possible implementations of the fourth aspect.

In a possible implementation, the processor is coupled to the memory through an interface.

In a possible implementation, the chip system further includes a memory. The memory stores a computer program or computer instructions.

A thirteenth aspect of embodiments of this application provides a computer storage medium. The computer storage medium stores a computer program. When the program is executed by a computer, the computer is enabled to perform the method according to any one of the first aspect, the possible implementations of the first aspect, the second aspect, the possible implementations of the second aspect, the third aspect, the possible implementations of the third aspect, the fourth aspect, or the possible implementations of the fourth aspect.

A fourteenth aspect of embodiments of this application provides a computer program product. The computer program product stores instructions. When the instructions are executed by a computer, the computer is enabled to perform the method according to any one of the first aspect, the possible implementations of the first aspect, the second aspect, the possible implementations of the second aspect, the third aspect, the possible implementations of the third aspect, the fourth aspect, or the possible implementations of the fourth aspect.

In the embodiments of this application, after obtaining the input image including the N image blocks, the image processing model may perform feature extraction on the input image to obtain the first feature map. In addition, the image processing model may further aggregate the $i^{th}$ image block in the input image and the M image blocks other than the $i^{th}$ image block in the input image to obtain the $i^{th}$ feature block in the second feature map, where the M image blocks include image blocks forming a preset position relationship with the $i^{th}$ image block. For the other image blocks than the $i^{th}$ image block in the input image, the image processing model may also perform similar operations. Therefore, the N feature blocks of the second feature map, that is, the second feature map, can be obtained. Finally, the image processing model may process the first feature map and the second feature map to obtain the output image. In the foregoing process, for any image block in the input image, the first feature map includes a feature obtained by the image processing model by performing feature extraction on the image block, and the second feature map includes a feature obtained by the image processing model by aggregating the image block and several image blocks that have a preset position relationship with the image block. As can be learned, in the process of obtaining the output image based on the first feature map and the second feature map by the image processing model, not only is the information of each image block in the input image considered, but also a relationship between each image block and image blocks whose positions are correlated with that of the image block is considered. Because the factors considered are relatively comprehensive, the output image obtained by the image processing model can have good quality.

## BRIEF DESCRIPTION OF DRAWINGS

FIG. 1 is a diagram of a structure of an artificial intelligence main framework;
FIG. 2a is a diagram of a structure of an image processing system according to an embodiment of this application;
FIG. 2b is a diagram of another structure of an image processing system according to an embodiment of this application;
FIG. 2c is a diagram of an image processing related device according to an embodiment of this application;
FIG. 3 is a diagram of an architecture of a system 100 according to an embodiment of this application;
FIG. 4 is a diagram of a structure of an image processing model according to an embodiment of this application;
FIG. 5 is a schematic flowchart of an image processing method according to an embodiment of this application;
FIG. 6 is a diagram of an input image according to an embodiment of this application;
FIG. 7 is another diagram of an input image according to an embodiment of this application;
FIG. 8a is another diagram of an input image according to an embodiment of this application;
FIG. 8b is another diagram of an input image according to an embodiment of this application;
FIG. 9 is a schematic flowchart for obtaining a second feature map according to an embodiment of this application;

FIG. 10 is a diagram of a structure of a long attention mechanism module according to an embodiment of this application;

FIG. 11 is a diagram of a structure of a fusion module according to an embodiment of this application;

FIG. 12 is a diagram of another structure of an image processing model according to an embodiment of this application;

FIG. 13 is another schematic flowchart of an image processing method according to an embodiment of this application;

FIG. 14 is a diagram of another structure of a long attention mechanism module according to an embodiment of this application;

FIG. 15 is a schematic flowchart of a model training method according to an embodiment of this application;

FIG. 16 is a schematic flowchart of a model training method according to an embodiment of this application;

FIG. 17 is a diagram of a structure of an image processing apparatus according to an embodiment of this application;

FIG. 18 is a diagram of another structure of an image processing apparatus according to an embodiment of this application;

FIG. 19 is a diagram of a structure of a model training apparatus according to an embodiment of this application;

FIG. 20 is a diagram of another structure of a model training apparatus according to an embodiment of this application;

FIG. 21 is a diagram of a structure of an execution device according to an embodiment of this application;

FIG. 22 is a diagram of a structure of a training device according to an embodiment of this application; and

FIG. 23 is a diagram of a structure of a chip according to an embodiment of this application.

## DESCRIPTION OF EMBODIMENTS

Embodiments of this application provide an image processing method and a related device thereof. During processing of an input image, not only is information of each image block considered, but also a relationship between each image block and image blocks whose positions are correlated with that of the image block is considered. Because factors considered are relatively comprehensive, an obtained output image can have good quality.

In the specification, claims, and the accompanying drawings of this application, the terms "first", "second", and the like are intended to distinguish similar objects but do not necessarily indicate a specific order or sequence. It should be understood that the terms used in such a way are interchangeable in appropriate circumstances, and this is merely a discrimination manner for describing objects having a same attribute in embodiments of this application. In addition, the terms "include", "have", and any other variant thereof are intended to cover a non-exclusive inclusion, so that a process, method, system, product, or device that includes a series of units is not necessarily limited to those units, but may include another unit not clearly listed or inherent to such a process, method, system, product, or device.

With rapid development of AI technologies, neural network models have been widely used in tasks such as computer vision (for example, image classification, target detection, and image super-resolution), and have achieved great success. However, a neural network model has a large quantity of parameters, needs to bear huge computational costs in a task execution process, and is difficult to deploy on a device (for example, a smartphone or a wearable device) with limited computing power. Therefore, it is very important to design a lightweight neural network model.

Currently, the lightweight neural network model is usually constructed based on a convolutional layer, for example, a 1x1 convolutional layer. Specifically, after obtaining an input image, the neural network model may perform a lightweight feature extraction operation such as 1x1 convolution on the input image, and an obtained feature map may be used as a final output image. It can be learned that the neural network model primarily performs lightweight feature extraction operations during image processing, so that a quantity of parameters of the model and computational costs that need to be borne can be reduced.

However, due to the nature of lightweight feature extraction, when the neural network model performs lightweight feature extraction on each image block in the input image, only information of each image block is usually considered. Because factors considered are relatively limited, the output image obtained by using the model cannot have good quality.

To resolve the foregoing problem, an embodiment of this application provides an image processing method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using the knowledge. In other words, the artificial intelligence technology is a branch of computer science, and attempts to understand essence of intelligence and produce a new intelligent machine that can react in a manner similar to human intelligence. Using artificial intelligence for data processing is a common application of artificial intelligence.

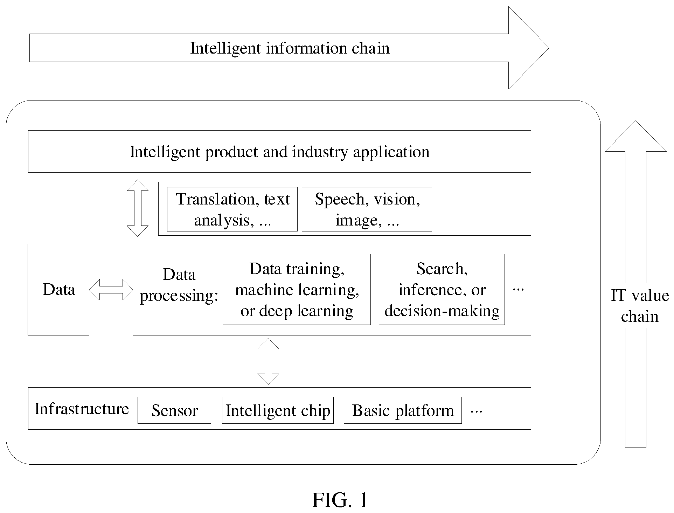

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of human intelligence to an industrial ecological process of a system.

(1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms, for example, a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the field of artificial intelligence. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision-making, and the like.
Machine learning and deep learning may mean performing symbolic and formal intelligent information modeling, extraction, preprocessing, training, and the like on data.
Inference is a process in which human intelligent inference is simulated in a computer or an intelligent system, and machine thinking and problem resolving are performed by using formalized information according to an inference control policy. Typical functions are searching and matching.
Decision-making is a process of making a decision after intelligent information is inferred, and usually provides functions such as classification, ranking, and prediction.

(4) General capability

After the data processing mentioned above is performed on the data, some general capabilities may be further formed based on a data processing result. For example, the general capability may be an algorithm or a general system, for example, translation, text analysis, computer vision processing, speech recognition, or image recognition.

(5) Intelligent product and industry application

The intelligent product and the industry application are a product and an application of the artificial intelligence system in various fields, and involve packaging of overall artificial intelligence solutions, to productize and apply intelligent information decision-making. Application fields of the intelligent information decision-making mainly include intelligent terminals, intelligent transportation, intelligent health care, autonomous driving, smart cities, and the like.
The following describes several application scenarios of this application.

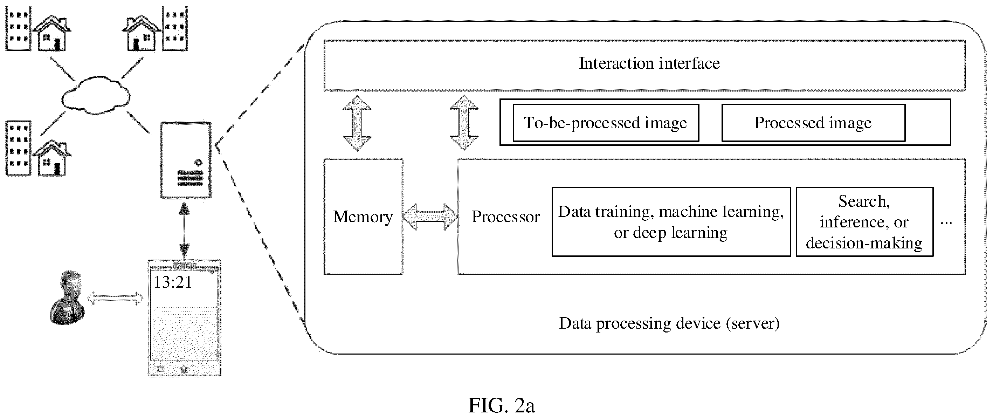

FIG. 2a is a diagram of a structure of a video processing system according to an embodiment of this application. The video processing system includes user equipment and a data processing device. The user equipment includes an intelligent terminal such as a mobile phone, a personal computer, or an information processing center. The user equipment is an image processing initiator, and is used as an image processing request initiator. Usually, a user initiates a request by using the user equipment.
The data processing device may be a device or a server with a data processing function, such as a cloud server, a network server, an application server, or a management server. The data processing device receives a video processing request from the intelligent terminal by using an interaction interface, and then performs information processing in such manners as machine learning, deep learning, searching, inference, and decision-making by using a data storage memory and a data processing processor. The memory in the data processing device may be a general term, including a local memory and a database that stores historical data. The database may be in the data processing device, or may be in another network server.

In the image processing system shown in FIG. 2a, the user equipment may receive an instruction of the user. For example, the user equipment may obtain a to-be-processed image entered or selected by the user, and then initiate a request to the data processing device, so that the data processing device performs an image processing application on the image obtained by the user equipment, to obtain a processed image. For example, the user equipment may obtain the to-be-processed image selected by the user, and initiate a processing request for the to-be-processed image to the data processing device. Then the data processing device may perform a series of processing, such as lightweight feature extraction and processing based on a long attention mechanism, on the to-be-processed image to obtain a processed image. It should be noted that the processed image may be used for subsequent further processing, so that a final processing result of the image is obtained. The final processing result of the image may be a category to which the image belongs, a location of a target object in the image, a super-resolution image, or the like.

In FIG. 2a, the data processing device may perform an image processing method according to an embodiment of this application.

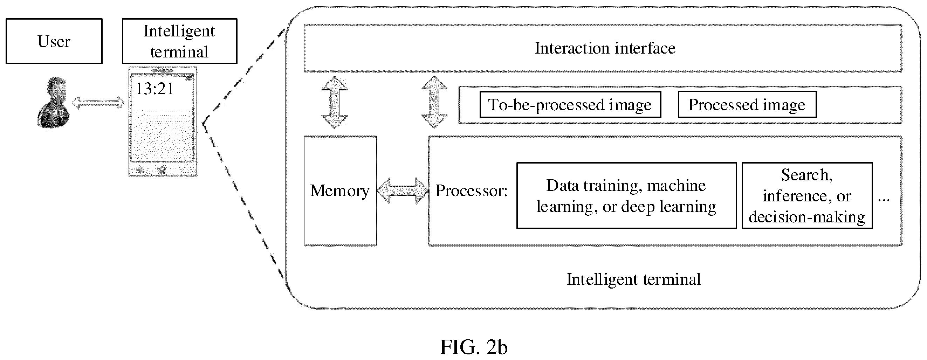

FIG. 2b is a diagram of another structure of an image processing system according to an embodiment of this application. In FIG. 2b, user equipment is directly used as a data processing device. The user equipment can directly obtain an input from a user and directly process the input by using hardware of the user equipment. A specific process is similar to that in FIG. 2a. For details, refer to the foregoing descriptions. Details are not described herein again.

In the image processing system shown in FIG. 2b, the user equipment may receive an instruction of the user. For example, the user equipment may obtain a to-be-processed image selected by the user, and then the user equipment performs a series of processing such as lightweight feature extraction and processing based on a long attention mechanism on the to-be-processed image to obtain a processed image. It should be noted that the processed image may be used for subsequent further processing, so that a final processing result of the image is obtained. The final processing result of the image may be a category to which the image belongs, a location of a target object in the image, a super-resolution image, or the like.

In FIG. 2b, the user equipment may perform an image processing method according to an embodiment of this application.

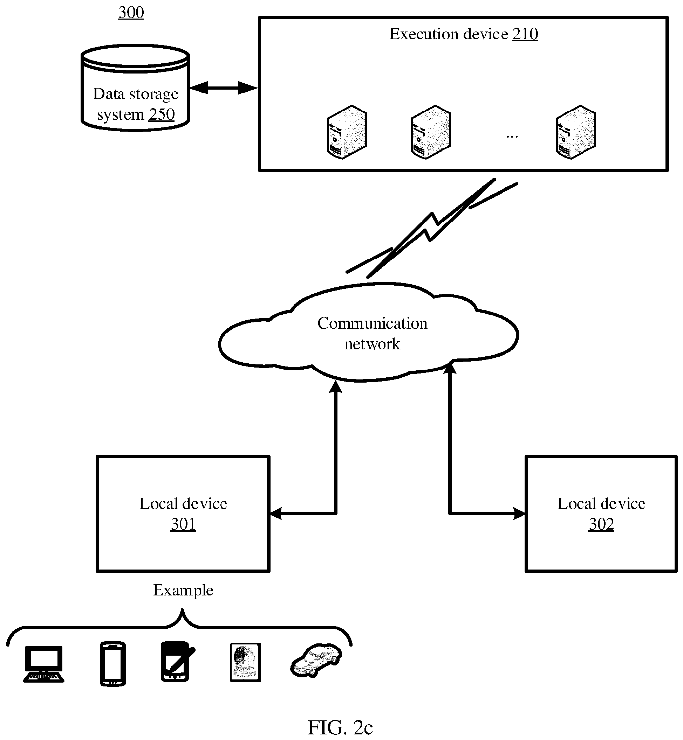

FIG. 2c is a diagram of an image processing related device according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training, machine learning, or deep learning by using a neural network model or another model (for example, a model based on a support vector machine), and perform an image processing application on an image by using a model obtained through data training or learning, to obtain a corresponding processing result.

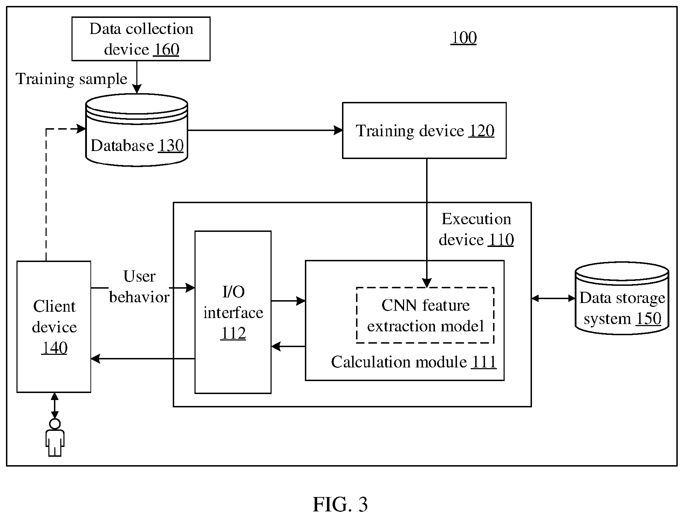

FIG. 3 is a diagram of an architecture of a system 100 according to an embodiment of this application. In FIG. 3, an execution device 110 is provided with an input/output (input/output, I/O) interface 112, to exchange data with an external device. A user may input data to the I/O interface 112 by using a client device 140. The input data in this embodiment of this application may include each to-be-scheduled task, a resource that can be invoked, and another parameter.

In a process in which the execution device 110 preprocesses the input data, or in a process in which a calculation module 111 of the execution device 110 performs related processing such as calculation (for example, implementing a function of a neural network in this application), the execution device 110 may invoke data, code, and the like in a data storage system 150 for corresponding processing, and may further store, in the data storage system 150, data, an instruction, and the like that are obtained through corresponding processing.

Finally, the I/O interface 112 returns a processing result to the client device 140, to provide the processing result for the user.

It should be noted that, for different objectives or different tasks, a training device 120 may generate corresponding target models/rules based on different training data. The corresponding target models/rules may be used to achieve the foregoing objectives or complete the foregoing tasks, to provide a required result for the user. The training data may be stored in a database 130, and is a training sample collected by a data collection device 160.

In a case shown in FIG. 3, the user may manually provide the input data, and the user may manually provide the input data in an interface provided by the I/O interface 112. In another case, the client device 140 may automatically send the input data to the I/O interface 112. If the client device 140 needs to obtain authorization from the user to automatically send the input data, the user may set a corresponding permission on the client device 140. The user may view, on the client device 140, a result output by the execution device 110. Specifically, the result may be presented in a specific manner, for example, displaying, a sound, or an action. The client device 140 may alternatively be used as a data collection end to collect, as new sample data, input data that is input to the I/O interface 112 and an output result that is output from the I/O interface 112, as shown in the figure, and store the new sample data in the database 130. Certainly, the client device 140 may alternatively not perform collection. Instead, the I/O interface 112 directly stores, as new sample data in the database 130, input data that is input to the I/O interface 112 and an output result that is output from the I/O interface 112.

It should be noted that FIG. 3 is merely a diagram of the system architecture according to this embodiment of this application. A position relationship between devices, components, modules, and the like shown in the figure does not constitute any limitation. For example, in FIG. 3, the data storage system 150 is an external memory relative to the execution device 110. In another case, the data storage system 150 may alternatively be disposed in the execution device 110. As shown in FIG. 3, a neural network may be obtained through training based on the training device 120.

An embodiment of this application further provides a chip. The chip includes a neural-network processing unit NPU. The chip may be disposed in the execution device 110 shown in FIG. 3, to complete calculation work of the calculation module 111. Alternatively, the chip may be disposed in the training device 120 shown in FIG. 3, to complete training work of the training device 120 and output a target model/rule.

The neural-network processing unit NPU serves as a coprocessor, and the NPU is mounted to a host central processing unit (central processing unit, CPU) (host CPU). The host CPU assigns a task. A core part of the NPU is an arithmetic circuit. A controller controls the arithmetic circuit to extract data in a memory (a weight memory or an input memory) and perform an operation.

In some implementations, the arithmetic circuit internally includes a plurality of processing units (process engine, PE). In some implementations, the arithmetic circuit is a two-dimensional systolic array. The arithmetic circuit may alternatively be a one-dimensional systolic array or another electronic circuit capable of performing mathematical operations such as multiplication and addition. In some implementations, the arithmetic circuit is a general-purpose matrix processor.

For example, it is assumed that there is an input matrix A, a weight matrix B, and an output matrix C. The arithmetic circuit fetches data corresponding to the matrix B from the weight memory, and buffers the data on each PE in the arithmetic circuit. The arithmetic circuit fetches data of the matrix A from the input memory, performs a matrix operation with the matrix B, and stores a partial result or final result of a resulting matrix in an accumulator (accumulator).

A vector calculation unit may perform further processing such as vector multiplication, vector addition, an exponential operation, a logarithmic operation, or value comparison on an output of the arithmetic circuit. For example, the vector calculation unit may be configured to perform network calculation, such as pooling (pooling), batch normalization (batch normalization), or local response normalization (local response normalization) at a non-convolutional or non-FC layer in a neural network.

In some implementations, the vector calculation unit can store a processed output vector in a unified buffer. For example, the vector calculation unit may apply a nonlinear function to the output of the arithmetic circuit, for example, an accumulated-value vector, to generate an activation value. In some implementations, the vector calculation unit generates a normalized value, a combined value, or a combination thereof. In some implementations, the processed output vector can be used as an activation input to the arithmetic circuit. For example, the processed output vector can be used at a subsequent layer of the neural network.

The unified memory is configured to store input data and output data.

For weight data, a direct memory access controller (direct memory access controller, DMAC) directly transfers input data in the external memory to the input memory and/or the unified memory, stores weight data in the external memory in the weight memory, and stores data in the unified memory in the external memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to invoke the instructions buffered in the instruction fetch buffer, to control a working process of the arithmetic accelerator.

Generally, the unified memory, the input memory, the weight memory, and the instruction fetch buffer may all be on-chip (on-chip) memories. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive neural network applications. Therefore, for ease of understanding, the following first describes terms and concepts related to the neural network in the embodiments of this application.

(1) Neural network

The neural network may include a neuron. The neuron may be an arithmetic unit that uses xs and an intercept of 1 as an input. An output of the arithmetic unit may be as follows:

$$h_{W,b}\left(x\right) = f\left(W^{T}x\right) = f\left(\sum_{s=1}^{n} W_{s}x_{s} + b\right) \qquad (1)$$

In the formula, s = 1, 2, ..., n, n is a natural number greater than 1, Ws is a weight of xs, and b is a bias of the neuron; and f is an activation function (activation function) of the neuron, and is used to introduce a nonlinear feature into the neural network, to convert an input signal in the neuron into an output signal. The output signal of the activation function may serve as an input of a next convolutional layer. The activation function may be a sigmoid function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx+b)$. From a physical layer, work at each layer of the neural network may be understood as completing transformation from input space to output space (that is, from row space to column space of a matrix) by performing five operations on the input space (a set of input vectors). The five operations include: 1. dimension increasing or dimension reduction; 2. scaling up/down; 3. rotation; 4. translation; and 5. "bending". The operation 1, the operation 2, and the operation 3 are performed by $Wx$, the operation 4 is performed by $+b$, and the operation 5 is performed by $a()$. The word "space" is used herein for expression because a classified object is not a single thing, but a type of thing. Space is a set of all individuals of this type of thing. $W$ is a weight vector, and each value in the vector indicates a weight value of one neuron at this layer of the neural network. The vector $W$ determines space transformation from the input space to the output space described above. In other words, a weight $W$ at each layer controls how to transform space. A purpose of training the neural network is to finally obtain a weight matrix (a weight matrix formed by vectors $W$ at a plurality of layers) at all layers of a trained neural network. Therefore, a training process of the neural network is essentially -a manner of learning control of space transformation, and more specifically, learning a weight matrix.

Because it is expected that an output of the neural network is as close as possible to a predicted value that is actually desired, a current predicted value of the network may be compared with a target value that is actually desired, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to reduce the predicted value until the neural network can predict the target value that is actually desired. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In a training process, the neural network may correct a value of a parameter in an initial neural network model by using an error back propagation (back propagation, BP) algorithm, so that a reconstruction error loss of the neural network model becomes smaller. Specifically, an input signal is subject to an error loss during forward transfer until the signal is output, and the parameter in the initial neural network model is updated based on back propagation of error loss information, so that the error loss converges. The back propagation algorithm is an error-loss-centered back propagation motion intended to obtain a parameter, such as a weight matrix, of an optimal neural network model.

The following describes the method provided in this application from a neural network training side and a neural network application side.

A model training method provided in embodiments of this application relates to data sequence processing, and may be specifically applied to a method such as data training, machine learning, or deep learning, to perform symbolized and formalized intelligent information modeling, extraction, preprocessing, training, and the like on training data (for example, an input image in the model training method provided in embodiments of this application), and finally obtain a trained neural network (for example, an image processing model in the model training method provided in embodiments of this application). In addition, in an image processing method provided in embodiments of this application, input data (for example, the input image in the image processing method provided in embodiments of this application) may be input into the trained neural network by using the foregoing trained neural network, to obtain output data (for example, an output image in the image processing method provided in embodiments of this application). It should be noted that the model training method and the image processing method provided in embodiments of this applicationare invented based on a same concept, and may also be understood as two parts of a system, or two stages of an overall procedure, for example, a model training stage and a model application stage.

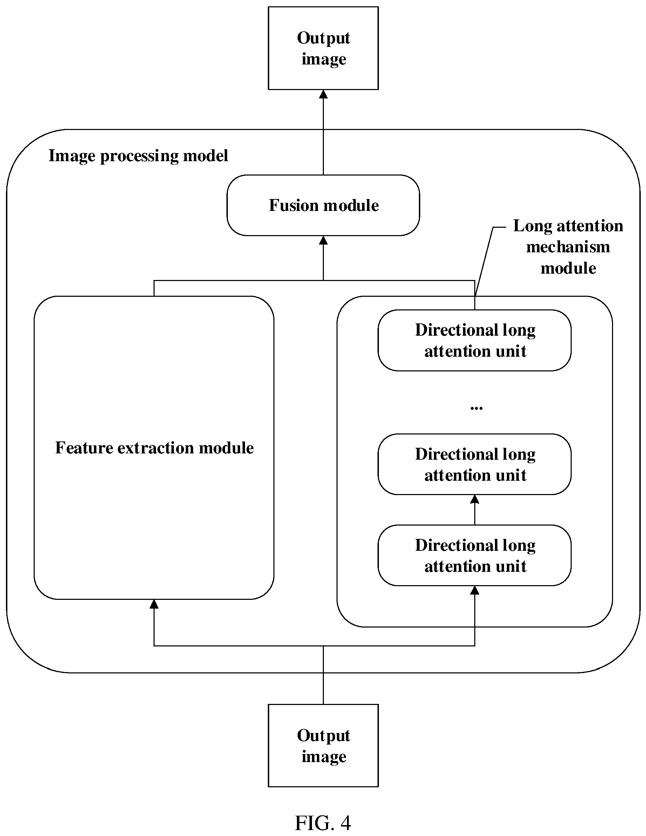

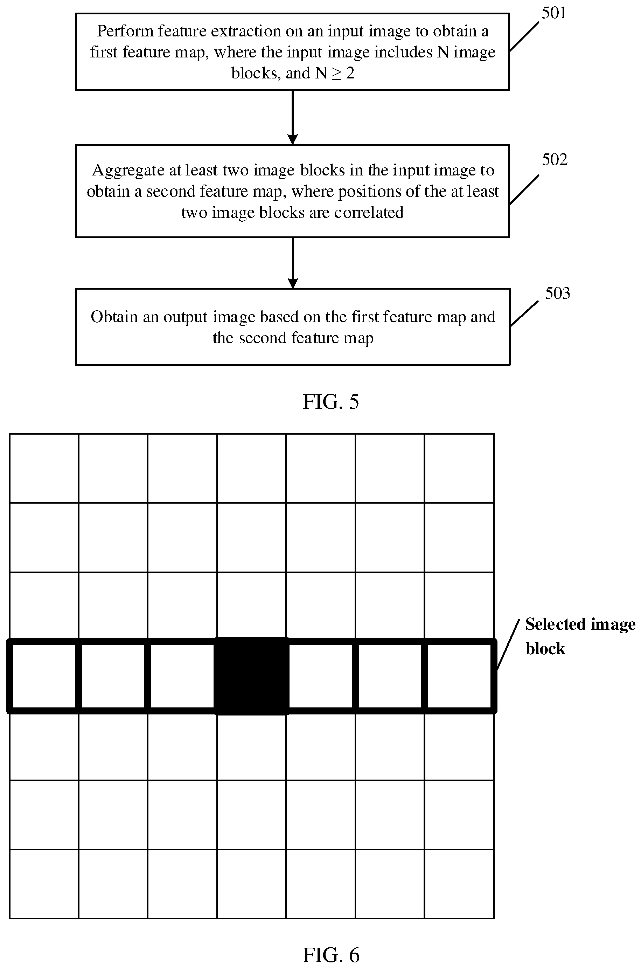

It should be noted that the image processing method provided in embodiments of this application may be implemented by using an image processing model. The image processing model has a plurality of structures. The following first describes a first structure of the image processing model. As shown in FIG. 4 (FIG. 4 is a diagram of a structure of an image processing model according to an embodiment of this application), the image processing model includes a feature extraction module, a long attention mechanism module, and a fusion module. An input end of the feature extraction module and an input end of the long attention mechanism module may be used as an input end of the image processing model. An output end of the feature extraction module and an output end of the long attention mechanism module are connected to an input end of the fusion module. An output end of the fusion module may be used as an output end of the image processing model. The long attention mechanism module may be constructed by using at least one directional long attention unit connected in series. To help understand a working procedure of the image processing model shown in FIG. 4, the following describes the working procedure with reference to FIG. 5. FIG. 5 is a schematic flowchart of an image processing method according to an embodiment of this application. As shown in FIG. 5, the method includes the following steps.

501: Perform feature extraction on an input image to obtain a first feature map, where the input image includes N image blocks, and $N \geq 2$.

In this embodiment, when a to-be-processed image needs to be processed, the to-be-processed image may be input into the image processing model as an input image. In this case, both the feature extraction module and the long attention mechanism module of the image processing model may receive the input image, and separately process the input image. It should be noted that the following uses only an example in which the to-be-processed image is directly input into the image processing model as an input image for description. In an actual application, a feature map obtained after feature extraction is performed on the to-be-processed image in advance may alternatively be input into the image processing model as an input image.

After obtaining the input image, the feature extraction module may perform lightweight feature extraction processing (for example, 1x1 convolution processing) on the input image to obtain the first feature map. It should be noted that the input image may be divided into the N image blocks (N is a positive integer greater than or equal to 2). For any one of the N image blocks, that is, for an $i^{th}$ image block (i = 1, ..., N) in the N image blocks, the feature extraction module may perform lightweight feature extraction processing on the $i^{th}$ image block to obtain an $i^{th}$ feature block in the first feature map. For other image blocks than the $i^{th}$ image block in the N image blocks, the feature extraction module may also perform the same operation on the other image blocks as on the $i^{th}$ image block. In this way, a total of N feature blocks of the first feature map can be obtained, which is equivalent to obtaining the first feature map. It may be understood that a size of the input image is usually equal to a size of the first feature map.

502: Aggregate at least two image blocks in the input image to obtain a second feature map, where positions of the at least two image blocks are correlated.

After obtaining the input image, the long attention mechanism module may process the input image based on a long attention mechanism to obtain the second feature map. In other words, because the input image may be divided into the N image blocks, the long attention mechanism module may aggregate at least two of the N image blocks to obtain the second feature map, where positions of the at least two image blocks are correlated. It should be noted that, because the input image may be divided into the N image blocks, for the $i^{th}$ image block in the N image blocks, the long attention mechanism module may first determine, in the other image blocks than the $i^{th}$ image block in the N image blocks, M image blocks (M is a positive integer greater than or equal to 1, and M is less than N) forming a preset position relationship with the $i^{th}$ image block, and then the long attention mechanism module may aggregate the $i^{th}$ image block and the M image blocks to obtain an $i^{th}$ feature block in the second feature map. For the other image blocks than the $i^{th}$ image block in the N image blocks, the long attention mechanism module may also perform the same operation on the other image blocks as on the $i^{th}$ image block. In this way, a total of N feature blocks of the second feature map can be obtained, which is equivalent to obtaining the second feature map. It may be understood that the size of the input image is usually equal to a size of the second feature map.

Specifically, the M image blocks forming the preset position relationship with the $i^{th}$ image block may be determined in a plurality of manners:

(1) In the N image blocks forming the input image, all image blocks located in a same row as the $i^{th}$ image block may be first determined, and then the M image blocks are selected from the image blocks. For example, as shown in FIG. 6 (FIG. 6 is a diagram of an input image according to an embodiment of this application), assuming M = 6, the $i^{th}$ image block is an image block in a fourth row and a fourth column in the input image. Because there are a total of six image blocks located in the same row (that is, in a horizontal direction of the image block) as the image block, all the six image blocks may be selected.

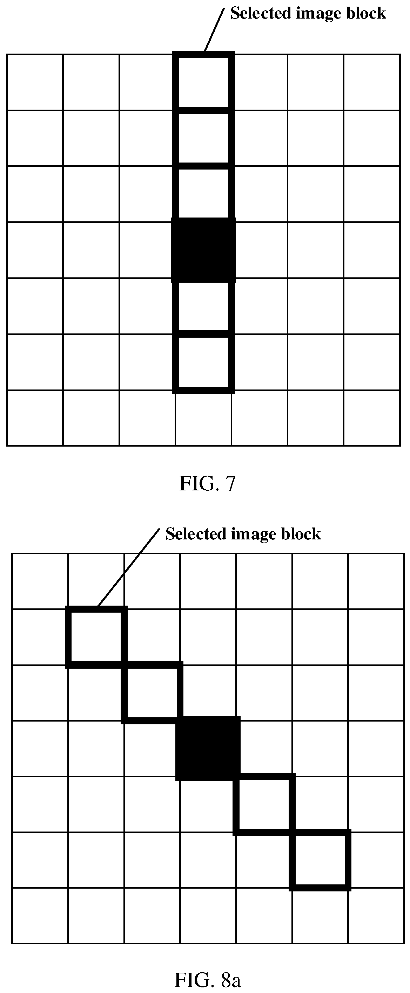

(2) In the N image blocks forming the input image, all image blocks located in a same column as the $i^{th}$ image block may be first determined, and then the M image blocks are selected from the image blocks. For example, as shown in FIG. 7 (FIG. 7 is another diagram of an input image according to an embodiment of this application), assuming M = 5, the $i^{th}$ image block is an image block in a fourth row and a fourth column in the input image. Because there are a total of six image blocks located in the same column (that is, in a vertical direction of the image block) as the image block, five image blocks may be randomly selected from the six image blocks.

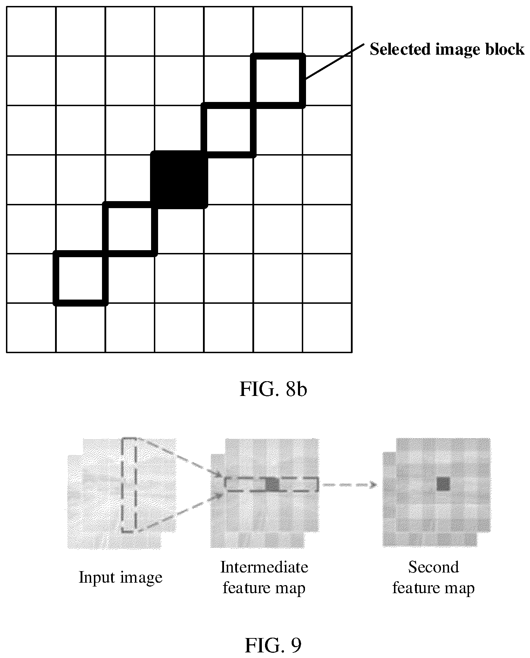

(3) In the N image blocks forming the input image, all image blocks forming an oblique line with the $i^{th}$ image block may be first determined, and then the M image blocks are selected from the image blocks. For example, as shown in FIG. 8a (FIG. 8a is another diagram of an input image according to an embodiment of this application), assuming M = 4, the $i^{th}$ image block is an image block in a fourth row and a fourth column in the input image. Because there are a total of six image blocks forming a 45-degree oblique line (that is, in a 45-degree direction of the image block) with the image block, four image blocks may be randomly selected from the six image blocks. For another example, as shown in FIG. 8b (FIG. 8b is another diagram of an input image according to an embodiment of this application), assuming M = 4, the $i^{th}$ image block is an image block in a fourth row and a fourth column in the input image. Because there are a total of six image blocks forming a 135-degree oblique line (that is, in a 135-degree direction of the image block) with the image block, four image blocks may be randomly selected from the six image blocks.

(4) In the N image blocks forming the input image, all image blocks located around the $i^{th}$ image block (the image blocks may be image blocks adjacent to the $i^{th}$ image block, or may be image blocks not adjacent to the $i^{th}$ image block) may be first determined, and then the M image blocks are selected from the image blocks.

(5) For the N image blocks forming the input image, M1 image blocks are first selected from all image blocks located in a same row as the $i^{th}$ image block, and then M2 image blocks are selected from all image blocks located in a same column as the $i^{th}$ image block, where M1 + M2 = M.

(6) For the N image blocks forming the input image, M1 image blocks are first selected from all image blocks located in a same row as the $i^{th}$ image block, and then M2 image blocks are selected from all image blocks forming an oblique line with the $i^{th}$ image block, where M1 + M2 = M.

(7) For the N image blocks forming the input image, M1 image blocks are first selected from all image blocks located in a same row as the $i^{th}$ image block, and then M2 image blocks are selected from all image blocks located around the $i^{th}$ image block, where M1 + M2 = M.

(8) For the N image blocks forming the input image, M1 image blocks are first selected from all image blocks located in a same column as the $i^{th}$ image block, and then M2 image blocks are selected from all image blocks forming an oblique line with the $i^{th}$ image block, where M1 + M2 = M.

(9) For the N image blocks forming the input image, M1 image blocks are first selected from all image blocks located in a same column as the $i^{th}$ image block, and then M2 image blocks are selected from all image blocks located around the $i^{th}$ image block, where M1 + M2 = M.

(10) For the N image blocks forming the input image, M1 image blocks are first selected from all image blocks forming an oblique line with the $i^{th}$ image block, and then M2 image blocks are selected from all image blocks located around the $i^{th}$ image block, where M1 + M2 = M.

(11) For the N image blocks forming the input image, M1 image blocks are first selected from all image blocks located in a same row as the $i^{th}$ image block, then M2 image blocks are selected from all image blocks located in a same column as the $i^{th}$ image block, and then M3 image blocks are selected from all image blocks forming an oblique line with the $i^{th}$ image block, where M1 + M2 + M3 = M.

(12) For the N image blocks forming the input image, M1 image blocks are first selected from all image blocks located in a same row as the $i^{th}$ image block, then M2 image blocks are selected from all image blocks located in a same column as the $i^{th}$ image block, and then M3 image blocks are selected from all image blocks located around the $i^{th}$ image block, where M1 + M2 + M3 = M.

(13) For the N image blocks forming the input image, M1 image blocks are first selected from all image blocks located in a same row as the $i^{th}$ image block, then M2 image blocks are selected from all image blocks forming an oblique line with the $i^{th}$ image block, and then M3 image blocks are selected from all the image blocks forming the oblique line with the $i^{th}$ image block, where M1 + M2 + M3 = M.

(14) For the N image blocks forming the input image, M1 image blocks are first selected from all image blocks located in a same column as the $i^{th}$ image block, then M2 image blocks are selected from all image blocks forming an oblique line with the $i^{th}$ image block, and then M3 image blocks are selected from all the image blocks forming the oblique line with the $i^{th}$ image block, where M1 + M2 + M3 = M.

(15) For the N image blocks forming the input image, M1 image blocks are first selected from all image blocks located in a same row as the $i^{th}$ image block, then M2 image blocks are selected from all image blocks located in a same column as the $i^{th}$ image block, then M3 image blocks are selected from all image blocks forming an oblique line with the $i^{th}$ image block, then M4 image blocks are selected from all the image blocks forming the oblique line with the $i^{th}$ image block, and so on, where M1 + M2 + M3 + M4 = M.

More specifically, the long attention mechanism module may obtain the second feature map in a plurality of manners:

(1) It is assumed that the long attention mechanism module includes only one directional long attention unit. After the directional long attention unit receives the input image, because the input image may be divided into the N image blocks, for the ith image block in the N image blocks, the directional long attention unit may perform weighted summation on the ith image block in the input image and the M image blocks forming the preset position relationship with the ith image block, to obtain the ith feature block in the second feature map. The process of weighted summation may be shown in the following formula:

$$a_i = F_i \mathrm{e} \ z_i + \sum_{k=1}^{M} F_k \mathrm{e} \ z_k, k = 1,..., \ \mathrm{M} \qquad (2)$$

In the foregoing formula, $z_i$ is the ith image block in the input image, $F_i$ is a weight corresponding to the ith image block, $z_k$ is a kth image block in the M image blocks forming the preset position relationship with the ith image block, $F_k$ is a weight corresponding to the kth image block, and $a_i$ is the ith feature block in the second feature map, where k = 1, ..., M.

For the other image blocks than the ith image block in the N image blocks, the directional long attention unit may also perform the same operation on the other image blocks as on the ith image block. In this way, a total of N feature blocks of the second feature map can be obtained, which is equivalent to obtaining the second feature map.

It is assumed that the long attention mechanism module includes two directional long attention units connected in series. After the first directional long attention unit receives the input image, because the input image may be divided into the N image blocks, for the ith image block in the N image blocks, the first directional long attention unit may perform weighted summation on the ith image block in the input image and the M image blocks forming the preset position relationship with the ith image block, to obtain an ith feature block in an intermediate feature map. The process of weighted summation is also shown in formula (2), but in this case, $a_i$ is the ith feature block in the intermediate feature map.

For the other image blocks than the ith image block in the N image blocks, the directional long attention unit may also perform the same operation on the other image blocks as on the ith image block. In this way, a total of N feature blocks of the second feature map can be obtained, which is equivalent to obtaining the second feature map.

After obtaining the second feature map, the first directional long attention unit may input the second feature map into the second directional long attention unit. Because the second feature map may be divided into the N feature blocks, for the ith feature block in the N feature blocks, the first directional long attention unit may perform weighted summation on the ith feature block in the second feature map and the M feature blocks forming the preset position relationship with the ith feature block in the second feature map (for a manner of determining the M feature blocks in the second feature map, refer to the foregoing manner of determining the M image blocks, and details are not described herein again), to obtain the ith feature block in the second feature map. The process of weighted summation may be shown in the following formula:

$$a_i' = F_i' \mathrm{e} \ a_i + \sum_{k=1}^{M} F_k' \mathrm{e} \ a_k, k = 1,..., \ \mathrm{M} \qquad (3)$$

In the foregoing formula, $a_i$ the ith feature block in the intermediate feature map, $F_i'$ is a weight corresponding to the ith feature block in the intermediate feature map, $a_k$ is a kth feature block in the M feature blocks forming the preset position relationship with the ith feature block in the second feature map, $F_k'$ is a weight corresponding to the kth feature block, and $a_i'$ is the ith feature block in the second feature map.

For example, as shown in FIG. 9 (FIG. 9 is a schematic flowchart for obtaining a second feature map according to an embodiment of this application), it is assumed that the long attention mechanism model includes one vertical directional long attention unit and one horizontal directional long attention unit, and that the input image includes 49 image blocks disposed in seven rows and seven columns. For ease of description, the following uses an image block in a fourth row and a fourth column in the input image as an example for description.

After receiving the input image, the vertical directional long attention unit may first obtain, for the image block in the fourth row and the fourth column, a group of weights corresponding to the image block in the fourth row and the fourth column, and then perform weighted summation on all image blocks in the fourth column by using the group of weights, to obtain a feature block in the fourth row and the fourth column in the intermediate feature map. Similarly, image blocks in other positions may also be processed in this way. Therefore, the vertical directional long attention unit may obtain the intermediate feature map including 49 feature blocks, and send the intermediate feature map to the horizontal directional long attention unit.

After receiving the intermediate feature map, the horizontal directional long attention unit may first obtain, for the feature block in the fourth row and the fourth column in the intermediate feature map, a group of weights corresponding to the feature block in the fourth row and the fourth column in the intermediate feature map, and then perform weighted sum calculation on all image blocks in the fourth row in the intermediate feature map by using the group of weights, to obtain a feature block in the fourth row and the fourth column in the second feature map. Similarly, image blocks in other positions may also be processed in this way. Therefore, the vertical directional long attention unit may obtain the second feature map including 49 feature blocks.

(3) It is assumed that the long attention mechanism module includes at least three directional long attention units (for example, three, four, or five directional long attention units) connected in series. A working process of the long attention mechanism module in (3) is similar to a working process of the long attention mechanism module in (2). A difference lies in that in (3), the long attention mechanism module generates at least two intermediate feature maps and finally generates the second feature map, but in (2), the long attention mechanism module generates only one intermediate feature map and finally generates the second feature map.

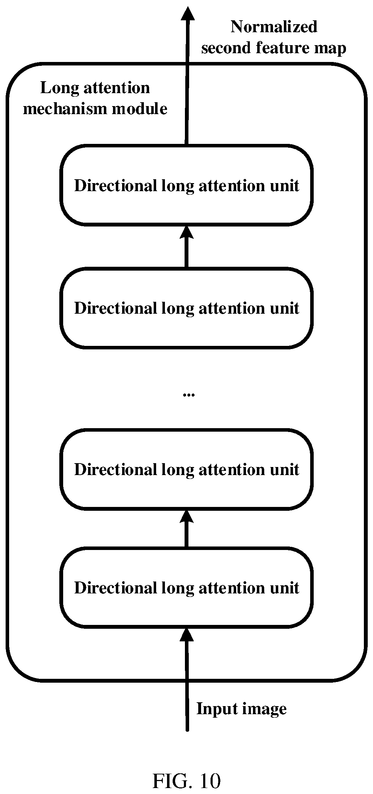

Further, as shown in FIG. 10 (FIG. 10 is a diagram of a structure of a long attention mechanism module according to an embodiment of this application, and FIG. 10 is drawn based on FIG. 4), the long attention mechanism module may further include a normalization unit, where the normalization unit is connected to a last directional long attention unit. In this case, after obtaining the second feature map, the last directional long attention unit may send the second feature map to the normalization unit, and the normalization unit may normalize the second feature map (for example, by using a sigmoid function) to obtain a normalized second feature map.

503: Obtain an output image based on the first feature map and the second feature map.

After obtaining the first feature map, the feature extraction module may send the first feature map to the fusion module. After obtaining the second feature map, the long attention mechanism module may send the second feature map to the fusion module. In this case, after obtaining the first feature map and the second feature map, the fusion module may process the first feature map and the second feature map to obtain the output image. The output image is a processed image, that is, an output of the entire image processing model.

Specifically, the fusion module may obtain the output image in a plurality of manners:

(1) Assuming that the fusion module includes only one fusion unit, after obtaining the first feature map and the second feature map, the fusion unit may perform fusion (for example, addition or multiplication) on the first feature map and the second feature map to obtain the output image.

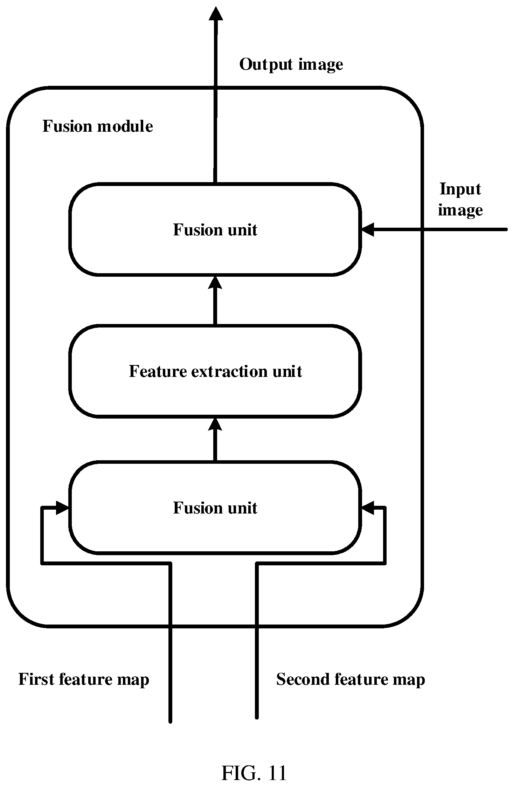

(2) As shown in FIG. 11 (FIG. 11 is a diagram of a structure of a fusion module according to an embodiment of this application, and FIG. 11 is drawn based on FIG. 4), assuming that the fusion module includes two fusion units and a feature extraction unit, after obtaining the first feature map and the second feature map, the first fusion unit may perform fusion (for example, addition or multiplication) on the first feature map and the second feature map to obtain a third feature map, and send the third feature map to the feature extraction unit. After obtaining the third feature map, the feature extraction unit may perform feature extraction (for example, 1x1 convolution) on the third feature map to obtain a fourth feature map, and send the fourth feature map to the second fusion unit. After obtaining the fourth feature map and the input image, the second fusion unit performs fusion (for example, addition and multiplication) on the fourth feature map and the input image to obtain the output image.

Further, if the long attention mechanism module finally outputs the normalized second feature map, an input of the fusion module is the first feature map and the normalized second feature map. Therefore, the fusion module may process the first feature map and the normalized second feature map to obtain the output image. For this process, refer to related descriptions in (1) and (2). Details are not described herein again.

In this embodiment of this application, after obtaining the input image including the N image blocks, the image processing model may perform feature extraction on the input image to obtain the first feature map. In addition, the image processing model may further aggregate the at least two image blocks in the input image to obtain the second feature map. Finally, the image processing model may process the first feature map and the second feature map to obtain the output image. In the foregoing process, the first feature map may be used to indicate information of each image block in the input image, and the second feature map may be used to indicate a relationship between one image block (or some or all image blocks) in the input image and image blocks whose positions are correlated with that of the image block. As can be learned, because factors considered in the process of obtaining the output image by the image processing model are relatively comprehensive, the output image obtained by the image processing model can have good quality.

More specifically, after obtaining the input image including the N image blocks, the image processing model may perform feature extraction on the input image to obtain the first feature map. In addition, the image processing model may further aggregate the $i^{th}$ image block in the input image and the M image blocks other than the $i^{th}$ image block in the input image to obtain the $i^{th}$ feature block in the second feature map, where the M image blocks include image blocks forming a preset position relationship with the $i^{th}$ image block. For the other image blocks than the $i^{th}$ image block in the input image, the image processing model may also perform similar operations. Therefore, the N feature blocks of the second feature map, that is, the second feature map, can be obtained. Finally, the image processing model may process the first feature map and the second feature map to obtain the output image. In the foregoing process, for any image block in the input image, the first feature map includes a feature obtained by the image processing model by performing feature extraction on the image block, and the second feature map includes a feature obtained by the image processing model by aggregating the image block and several image blocks that have a preset position relationship with the image block. As can be learned, in the process of obtaining the output image based on the first feature map and the second feature map by the image processing model, not only is the information of each image block in the input image considered, but also a relationship between each image block and image blocks whose positions are correlated with that of the image block is considered. Because the factors considered are relatively comprehensive, the output image obtained by the image processing model can have good quality.

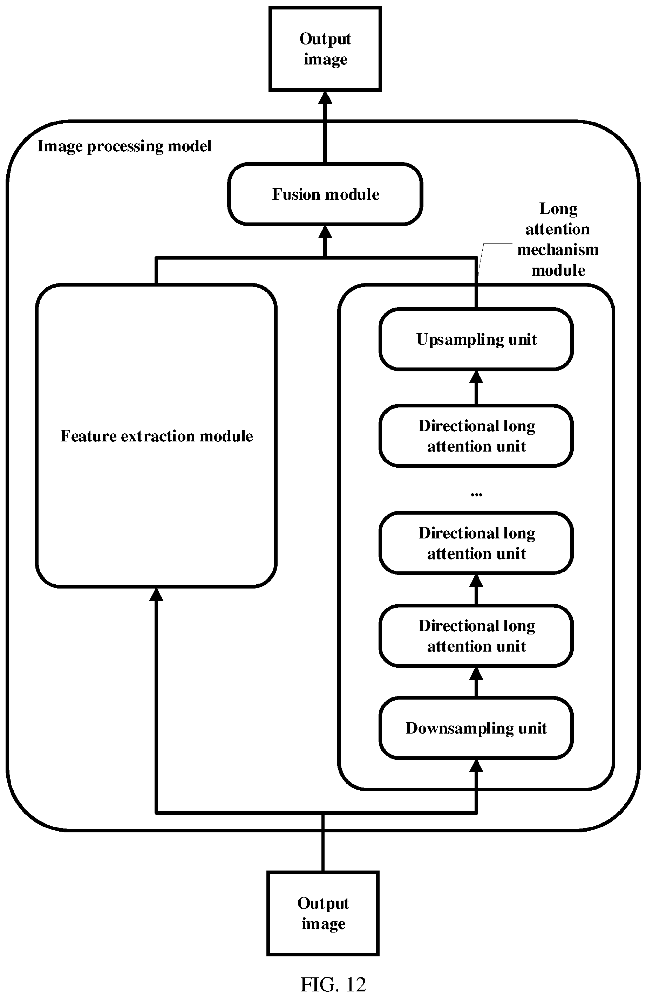

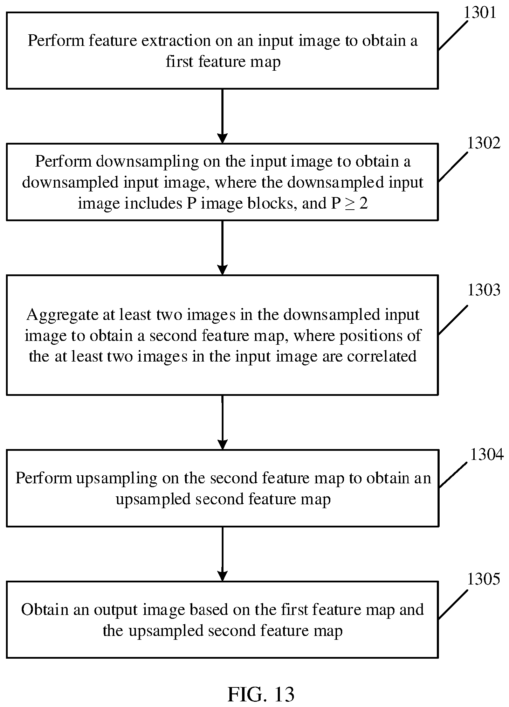

The foregoing describes in detail the first structure of the image processing model. The following describes a second structure of the image processing model. As shown in FIG. 12 (FIG. 12 is a diagram of another structure of an image processing model according to an embodiment of this application), the image processing model includes a feature extraction module, a long attention mechanism module, and a fusion module. An input end of the feature extraction module and an input end of the long attention mechanism module may be used as an input end of the image processing model. An output end of the feature extraction module and an output end of the long attention mechanism module are connected to an input end of the fusion module. An output end of the fusion module may be used as an output end of the image processing model. The long attention mechanism module may be constructed by using an upsampling unit, at least one directional long attention unit, and a downsampling unit that are connected in series. To help understand a working procedure of the image processing model shown in FIG. 12, the following describes the working procedure with reference to FIG. 13. FIG. 13 is another schematic flowchart of an image processing method according to an embodiment of this application. As shown in FIG. 13, the method includes the following steps.

1301: Perform feature extraction on an input image to obtain a first feature map.

For a description of step 1301, refer to a related description of step 501 in the embodiment shown in FIG. 5. Details are not described herein again.

Perform downsampling on the input image to obtain a downsampled input image, where the downsampled input image includes P image blocks, and $P \geq 2$.

After obtaining the input image, the downsampling unit of the long attention mechanism module may perform downsampling on the input image to obtain the downsampled input image, and send the downsampled input image to the directional long attention unit. It should be noted that the input image may be divided into N images, but a size of the downsampled input image is usually less than that of the input image. Therefore, the downsampled input image includes the P image blocks, where $N > P \geq 2$.

1303: Aggregate at least two images in the downsampled input image to obtain a second feature map, where positions of the at least two images in the input image are correlated.

The at least one directional long attention unit may process the downsampled input image based on a long attention mechanism to obtain the second feature map. In other words, because the downsampled input image may be divided into the P image blocks, the at least one directional long attention unit may aggregate at least two images in the P image blocks to obtain the second feature map, where positions of the at least two images in the input image are correlated. It should be noted that, because the downsampled input image may be divided into the P image blocks, for a $j^{th}$ image block in the P image blocks, the at least one directional long attention unit may first determine, in other image blocks than the $j^{th}$ image block in the P image blocks, Q image blocks (Q is a positive integer greater than or equal to 1, and Q is less than P) forming a preset position relationship with the $j^{th}$ image block, and then the at least one directional long attention unit may aggregate the $j^{th}$ image block and the Q image blocks to obtain a $j^{th}$ feature block in the second feature map. For the other image blocks than the $j^{th}$ image block in the P image blocks, the at least one directional long attention unit may also perform the same operation on the other image blocks as on the $j^{th}$ image block. In this way, a total of P feature blocks of the second feature map can be obtained, which is equivalent to obtaining the second feature map. It may be understood that the size of the input image is usually equal to the size of the downsampled input image.

After obtaining the second feature map, the at least one directional long attention unit may send the second feature map to the downsampling unit.

In a possible implementation, the P image blocks forming a preset position relationship with the $j^{th}$ image block include at least one of the following: an image block located in a same row as the $j^{th}$ image block, an image block located in a same column as the $j^{th}$ image block, an image block forming an oblique line with the $j^{th}$ image block, and an image block located around the $j^{th}$ image block. It should be noted that, for a description of the process of determining the P image blocks that form the preset position relationship with the $j^{th}$ image block, reference may be made to a related description of the process of determining the M image blocks that form the preset position relationship with the $i^{th}$ image block in step 502. Details are not described herein again.

In a possible implementation, aggregating the $j^{th}$ image block in the downsampled input image and the Q image blocks other than the $j^{th}$ image block in the downsampled input image to obtain the $j^{th}$ feature block in the second feature map includes: performing weighted summation on the $j^{th}$ image block in the downsampled input image and the Q image blocks other than the $j^{th}$ image block in the downsampled input image to obtain the $j^{th}$ feature block in the second feature map. It should be noted that, for a description of obtaining the second feature map by the at least one directional long attention unit by performing weighted summation, reference may be made to a related description of obtaining the second feature map by the long attention mechanism module by performing weighted summation in step 502. Details are not described herein again.

1304: Perform upsampling on the second feature map to obtain an upsampled second feature map.

After obtaining the second feature map, the upsampling unit may perform upsampling on the second feature map to obtain the upsampled second feature map. It should be noted that a size of the upsampled second feature map is usually equal to that of the input image. Therefore, the upsampled second feature map includes N feature blocks.

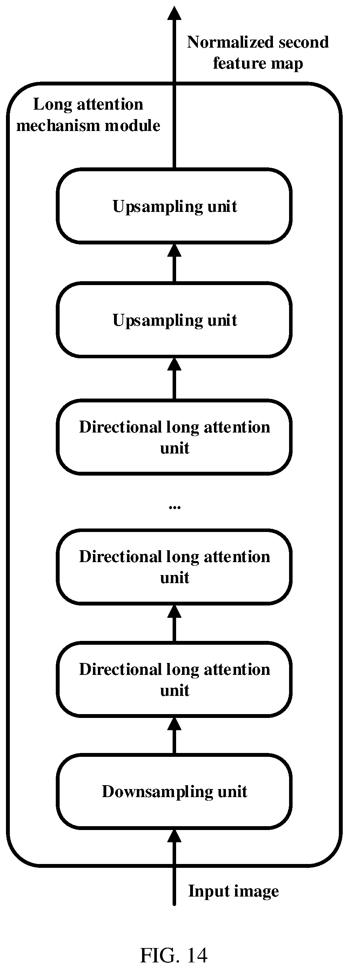

In a possible implementation, before obtaining an output image based on the first feature map and the upsampled second feature map, the method further includes: normalizing the upsampled second feature map to obtain a normalized second feature map. It should be noted that, as shown in FIG. 14 (FIG. 14 is a diagram of another structure of a long attention mechanism module according to an embodiment of this application, and FIG. 14 is drawn based on FIG. 12), the long attention mechanism module may further include a normalization unit, where the normalization unit is connected to the upsampling unit. In this case, after obtaining the upsampled second feature map, the upsampling unit may send the upsampled second feature map to the normalization unit, and the normalization unit may normalize the upsampled second feature map (for example, by using a sigmoid function) to obtain the normalized second feature map.

1305: Obtain the output image based on the first feature map and the upsampled second feature map.

After obtaining the first feature map, the feature extraction module may send the first feature map to the fusion module. After obtaining the upsampled second feature map, the upsampling unit of the long attention mechanism module may send the upsampled second feature map to the fusion module. In this case, after obtaining the first feature map and the upsampled second feature map, the fusion module may process the first feature map and the upsampled second feature map to obtain the output image. The output image is a processed image, that is, an output of the entire image processing model.

In a possible implementation, the obtaining the output image based on the first feature map and the upsampled second feature map includes: fusing the first feature map and the upsampled second feature map to obtain a third feature map; performing feature extraction on the third feature map to obtain a fourth feature map; and fusing the fourth feature map and the input image to obtain the output image.

In a possible implementation, the obtaining the output image based on the first feature map and the upsampled second feature map includes: fusing the first feature map and the upsampled second feature map to obtain the output image.

In a possible implementation, the obtaining the output image based on the first feature map and the upsampled second feature map includes: obtaining the output image based on the first feature map and the normalized second feature map.

For a description of step 1305, refer to a related description of step 503 in the embodiment shown in FIG. 5. Details are not described herein again.

In this embodiment of this application, after obtaining the input image including the N image blocks, the image processing model may perform feature extraction on the input image to obtain the first feature map. In addition, the image processing model may further perform downsampling on the input image to obtain the downsampled input image, and then the image processing model may aggregate the at least two image blocks in the downsampled input image to obtain the second feature map. Then the image processing model may perform upsampling on the second feature map to obtain the upsampled second feature map. Finally, the image processing model may process the first feature map and the upsampled second feature map to obtain the output image. In the foregoing process, the first feature map may be used to indicate information of each image block in the input image, and the upsampled second feature map may be used to indicate a relationship between one image block (or some or all image blocks) in the input image and image blocks whose positions are correlated with that of the image block. As can be learned, because factors considered in the process of obtaining the output image by the image processing model are relatively comprehensive, the output image obtained by the image processing model can have good quality.

More specifically, after obtaining the input image including the N image blocks, the image processing model may perform feature extraction on the input image to obtain the first feature map. In addition, the image processing model may further first perform downsampling on the input image to obtain the downsampled input image including the P image blocks. Then the image processing model may aggregate the $j^{th}$ image block in the downsampled input image and the Q image blocks other than the j$^{th}$ image block in the downsampled input image to obtain the j$^{th}$ feature block in the second feature map, where the Q image blocks include image blocks forming a preset position relationship with the i$^{th}$ image block. For the other image blocks than the j$^{th}$ image block in the downsampled input image, the image processing model may also perform similar operations. Therefore, the P feature blocks of the second feature map, that is, the second feature map, can be obtained. Then the image processing model may perform upsampling on the second feature map to obtain the upsampled second feature map including the N feature blocks. Finally, the image processing model may process the first feature map and the upsampled second feature map to obtain the output image. In the foregoing process, for any image block in the input image, the first feature map includes a feature obtained by the image processing model by performing feature extraction on the image block, and the upsampled second feature map includes a feature obtained by the image processing model by aggregating the image block and several image blocks that have a preset position relationship with the image block. As can be learned, in the process of obtaining the output image based on the first feature map and the upsampled second feature map by the image processing model, not only is the information of each image block in the input image considered, but also a relationship between each image block and the image blocks whose positions are correlated with that of the image block is considered. Because the factors considered are relatively comprehensive, the output image obtained by the image processing model can have good quality.

It should be noted that the image processing model provided in this embodiment of this application may be applied to a plurality of scenarios. For example, a plurality of image processing models provided in this embodiment of this application are connected in series to form a new model, to implement more advanced image processing. For another example, the image processing model provided in this embodiment of this application is connected to an image classifier to form an image classification model, to implement an image classification task. For another example, the image processing model provided in this embodiment of this application is connected to a target detector to form a target detection model, to implement a target detection task.

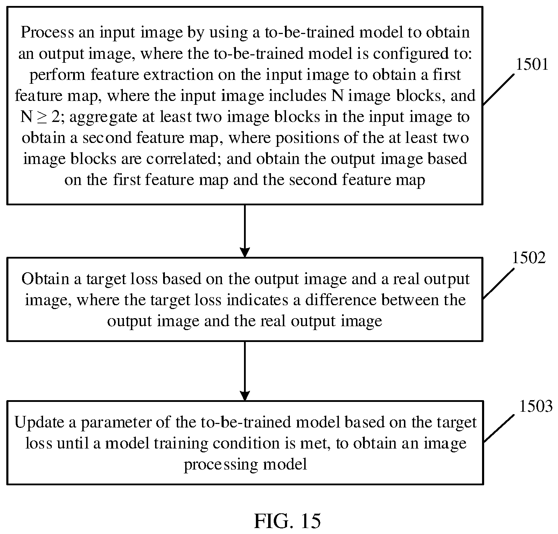

The foregoing describes in detail the image processing methods provided in embodiments of this application. The following describes model training methods provided in embodiments of this application. FIG. 15 is a schematic flowchart of a model training method according to an embodiment of this application. As shown in FIG. 15, the method includes the following steps.

1501: Process an input image by using a to-be-trained model to obtain an output image, where the to-be-trained model is configured to: perform feature extraction on the input image to obtain a first feature map, where the input image includes N image blocks, and N ≥ 2; aggregate at least two image blocks in the input image to obtain a second feature map, where positions of the at least two image blocks are correlated; and obtain the output image based on the first feature map and the second feature map.

In this embodiment, when the to-be-trained model (a neural network that needs to be trained) needs to be trained, a batch of training data may be first obtained, and the batch of training data includes the input image. It should be noted that a real output image corresponding to the input image is known.

After the input image is obtained, the input image may be input into the to-be-trained model, so that the to-be-trained model processes the input image to obtain the output image. The to-be-trained model is configured to: perform feature extraction on the input image to obtain the first feature map, where the input image includes the N image blocks, and N ≥ 2; aggregate the at least two image blocks in the input image to obtain the second feature map, where the positions of the at least two image blocks are correlated; and obtain the output image based on the first feature map and the second feature map.

In a possible implementation, the to-be-trained model is configured to aggregate an i$^{th}$ image block in the input image and M image blocks other than the i$^{th}$ image block in the input image to obtain an i$^{th}$ feature block in the second feature map, where the M image blocks include image blocks forming a preset position relationship with the i$^{th}$ image block, N > M ≥ 1, and i = 1, ..., N.

In a possible implementation, the M image blocks include at least one of the following: an image block located in a same row as the i$^{th}$ image block, an image block located in a same column as the i$^{th}$ image block, an image block forming an oblique line with the i$^{th}$ image block, and an image block located around the i$^{th}$ image block.

In a possible implementation, the to-be-trained model is configured to perform weighted summation on the i$^{th}$ image block in the input image and the M image blocks other than the i$^{th}$ image block in the input image to obtain the i$^{th}$ feature block in the second feature map.

In a possible implementation, the to-be-trained model is configured to: fuse the first feature map and the second feature map to obtain a third feature map; perform feature extraction on the third feature map to obtain a fourth feature map; and fuse the fourth feature map and the input image to obtain the output image.

In a possible implementation, the to-be-trained model is configured to fuse the first feature map and the second feature map to obtain the output image.

In a possible implementation, the to-be-trained model is further configured to normalize the second feature map to obtain a normalized second feature map; and the to-be-trained model is configured to obtain the output image based on the first feature map and the normalized second feature map.

1502: Obtain a target loss based on the output image and the real output image, where the target loss indicates a difference between the output image and the real output image.

After the output image is obtained, calculation may be performed on the output image and the real output image by using a preset loss function, to obtain the target loss, where the target loss indicates the difference between the output image and the real output image.

1503: Update a parameter of the to-be-trained model based on the target loss until a model training condition is met, to obtain an image processing model.

After the target loss is obtained, the parameter of the to-be-trained model may be updated based on the target loss, and the to-be-trained model with the updated parameter is trained by using a next batch of training data, until the model training condition is met (for example, convergence of the target loss is achieved). In this way, the image processing model shown in FIG. 4 is obtained.

The image processing model obtained through training in this embodiment of this application has an image processing capability. Specifically, after obtaining an input image including N image blocks, the image processing model may perform feature extraction on the input image to obtain a first feature map. In addition, the image processing model may further aggregate an $i^{th}$ image block in the input image and M image blocks other than the $i^{th}$ image block in the input image to obtain an $i^{th}$ feature block in a second feature map, where the M image blocks include image blocks forming a preset position relationship with the $i^{th}$ image block. For the other image blocks than the $i^{th}$ image block in the input image, the image processing model may also perform similar operations. Therefore, N feature blocks of the second feature map, that is, the second feature map, can be obtained. Finally, the image processing model may process the first feature map and the second feature map to obtain an output image. In the foregoing process, for any image block in the input image, the first feature map includes a feature obtained by the image processing model by performing feature extraction on the image block, and the second feature map includes a feature obtained by the image processing model by aggregating the image block and several image blocks that have a preset position relationship with the image block. As can be learned, in the process of obtaining the output image based on the first feature map and the second feature map by the image processing model, not only is information of each image block in the input image considered, but also a relationship between each image block and image blocks whose positions are correlated with that of the image block is considered. Because the factors considered are relatively comprehensive, the output image obtained by the image processing model can have good quality.

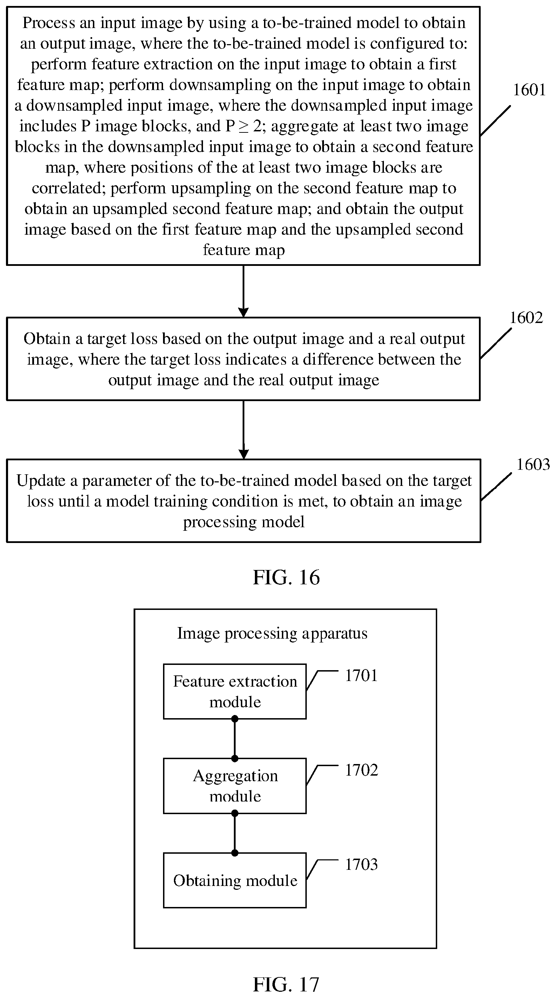

FIG. 16 is a schematic flowchart of a model training method according to an embodiment of this application. As shown in FIG. 16, the method includes the following steps.

1601: Process an input image by using a to-be-trained model to obtain an output image, where the to-be-trained model is configured to: perform feature extraction on the input image to obtain a first feature map; perform downsampling on the input image to obtain a downsampled input image, where the downsampled input image includes P image blocks, and $P \geq 2$; aggregate at least two image blocks in the downsampled input image to obtain a second feature map, where positions of the at least two image blocks are correlated; perform upsampling on the second feature map to obtain an upsampled second feature map; and obtain the output image based on the first feature map and the upsampled second feature map.

In this embodiment, when the to-be-trained model (a neural network that needs to be trained) needs to be trained, a batch of training data may be first obtained, and the batch of training data includes the input image. It should be noted that a real output image corresponding to the input image is known.

After the input image is obtained, the input image may be input into the to-be-trained model, so that the to-be-trained model processes the input image to obtain the output image. The to-be-trained model is configured to: perform feature extraction on the input image to obtain the first feature map; perform downsampling on the input image to obtain the downsampled input image, where the downsampled input image includes the P image blocks, and $P \geq 2$; aggregate the at least two image blocks in the downsampled input image to obtain the second feature map, where the positions of the at least two image blocks are correlated; perform upsampling on the second feature map to obtain the upsampled second feature map; and obtain the output image based on the first feature map and the upsampled second feature map.

In a possible implementation, the to-be-trained model is configured to aggregate a $j^{th}$ image block in the downsampled input image and Q image blocks other than the $j^{th}$ image block in the downsampled input image to obtain a $j^{th}$ feature block in the second feature map, where the Q image blocks include image blocks forming a preset position relationship with the $j^{th}$ image block, $P > Q \geq 1$, and j = 1, ..., P.

In a possible implementation, the P image blocks include at least one of the following: an image block located in a same row as the $j^{th}$ image block, an image block located in a same column as the $j^{th}$ image block, an image block forming an oblique line with the $j^{th}$ image block, and an image block located around the $j^{th}$ image block.

In a possible implementation, the to-be-trained model is configured to perform weighted summation on the $j^{th}$ image block in the downsampled input image and the Q image blocks other than the $j^{th}$ image block in the downsampled input image to obtain the $j^{th}$ feature block in the second feature map.

In a possible implementation, the to-be-trained model is configured to: fuse the first feature map and the upsampled second feature map to obtain a third feature map; perform feature extraction on the third feature map to obtain a fourth feature map; and fuse the fourth feature map and the input image to obtain the output image.

In a possible implementation, the to-be-trained model is configured to fuse the first feature map and the upsampled second feature map to obtain the output image.

In a possible implementation, the to-be-trained model is further configured to normalize the upsampled second feature map to obtain a normalized second feature map; and the to-be-trained model is configured to obtain the output image based on the first feature map and the normalized second feature map.

1602: Obtain a target loss based on the output image and the real output image, where the target loss indicates a difference between the output image and the real output image.

After the output image is obtained, calculation may be performed on the output image and the real output image by using a preset loss function, to obtain the target loss, where the target loss indicates the difference between the output image and the real output image.

1603: Update a parameter of the to-be-trained model based on the target loss until a model training condition is met, to obtain an image processing model.

After the target loss is obtained, the parameter of the to-be-trained model may be updated based on the target loss, and the to-be-trained model with the updated parameter is trained by using a next batch of training data, until the model training condition is met (for example, convergence of the target loss is achieved). In this way, the image processing model shown in FIG. 12 is obtained.

The image processing model obtained through training in this embodiment of this application has an image processing capability. Specifically, after obtaining an input image including N image blocks, the image processing model may perform feature extraction on the input image to obtain a first feature map. In addition, the image processing model may further first perform downsampling on the input image to obtain a downsampled input image including P image blocks. Then the image processing model may aggregate a $j^{th}$ image block in the downsampled input image and Q image blocks other than the $j^{th}$ image block in the downsampled input image to obtain a $j^{th}$ feature block in a second feature map, where the Q image blocks include image blocks forming a preset position relationship with the $i^{th}$ image block. For the other image blocks than the $j^{th}$ image block in the downsampled input image, the image processing model may also perform similar operations. Therefore, P feature blocks of the second feature map, that is, the second feature map, can be obtained. Then the image processing model may perform upsampling on the second feature map to obtain an upsampled second feature map including N feature blocks. Finally, the image processing model may process the first feature map and the upsampled second feature map to obtain an output image. In the foregoing process, for any image block in the input image, the first feature map includes a feature obtained by the image processing model by performing feature extraction on the image block, and the upsampled second feature map includes a feature obtained by the image processing model by aggregating the image block and several image blocks that have a preset position relationship with the image block. As can be learned, in the process of obtaining the output image based on the first feature map and the upsampled second feature map by the image processing model, not only is information of each image block in the input image considered, but also a relationship between each image block and the image blocks whose positions are correlated with that of the image block is considered. Because the factors considered are relatively comprehensive, the output image obtained by the image processing model can have good quality.

The foregoing describes in detail the model training methods provided in embodiments of this application. The following describes image processing apparatuses and model training apparatuses provided in embodiments of this application. FIG. 17 is a diagram of a structure of an image processing apparatus according to an embodiment of this application. As shown in FIG. 17, the apparatus includes the image processing model shown in FIG. 4. The apparatus includes:

a feature extraction module 1701, configured to perform feature extraction on an input image to obtain a first feature map, where the input image includes N image blocks, and $N \geq 2$;
an aggregation module 1702, configured to aggregate at least two image blocks in the input image to obtain a second feature map, where positions of the at least two image blocks are correlated; and
an obtaining module 1703, configured to obtain an output image based on the first feature map and the second feature map.

In a possible implementation, the aggregation module 1702 is configured to aggregate an $i^{th}$ image block in the input image and M image blocks other than the $i^{th}$ image block in the input image to obtain an $i^{th}$ feature block in the second feature map, where the M image blocks include image blocks forming a preset position relationship with the $i^{th}$ image block, $N > M \geq 1$, and i = 1, ..., N.

In a possible implementation, the M image blocks include at least one of the following: an image block located in a same row as the $i^{th}$ image block, an image block located in a same column as the $i^{th}$ image block, an image block forming an oblique line with the $i^{th}$ image block, and an image block located around the $i^{th}$ image block.

In a possible implementation, the aggregation module 1702 is configured to perform weighted summation on the $i^{th}$ image block in the input image and the M image blocks other than the $i^{th}$ image block in the input image to obtain the $i^{th}$ feature block in the second feature map.

In a possible implementation, the obtaining module 1703 is configured to: fuse the first feature map and the second feature map to obtain a third feature map; perform feature extraction on the third feature map to obtain a fourth feature map; and fuse the fourth feature map and the input image to obtain the output image.

In a possible implementation, the obtaining module 1703 is configured to fuse the first feature map and the second feature map to obtain the output image.

In a possible implementation, the apparatus further includes a normalization module, configured to normalize the second feature map to obtain a normalized second feature map; and the obtaining module 1703 is configured to obtain the output image based on the first feature map and the normalized second feature map.

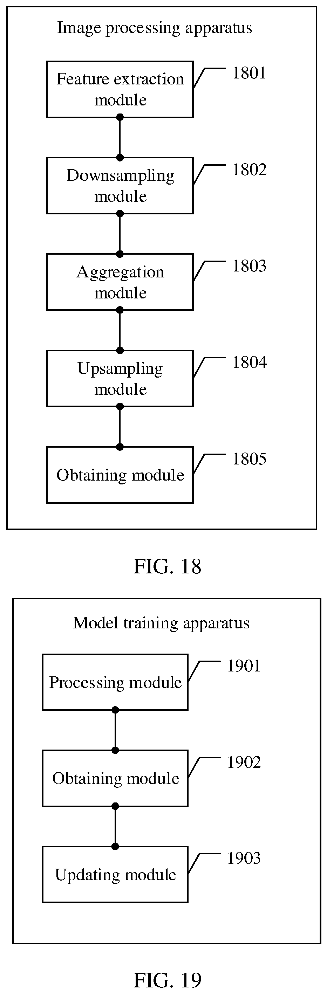

FIG. 18 is a diagram of another structure of an image processing apparatus according to an embodiment of this application. As shown in FIG. 18, the apparatus includes the image processing model shown in FIG. 12. The apparatus includes:

a feature extraction module 1801, configured to perform feature extraction on an input image to obtain a first feature map;

a downsampling module 1802, configured to perform downsampling on the input image to obtain a downsampled input image, where the downsampled input image includes P image blocks, and $P \geq 2$;

an aggregation module 1803, configured to aggregate at least two image blocks in the downsampled input image to obtain a second feature map, where positions of the at least two image blocks are correlated;

an upsampling module 1804, configured to perform upsampling on the second feature map to obtain an upsampled second feature map; and

an obtaining module 1805, configured to obtain an output image based on the first feature map and the upsampled second feature map.

In a possible implementation, the aggregation module 1803 is configured to aggregate a $j^{th}$ image block in the downsampled input image and Q image blocks other than the $j^{th}$ image block in the downsampled input image to obtain a $j^{th}$ feature block in the second feature map, where the Q image blocks include image blocks forming a preset position relationship with the $j^{th}$ image block, $P > Q \geq 1$, and $j = 1, ..., P$.

In a possible implementation, the P image blocks forming a preset position relationship with the $j^{th}$ image block include at least one of the following: an image block located in a same row as the $j^{th}$ image block, an image block located in a same column as the $j^{th}$ image block, an image block forming an oblique line with the $j^{th}$ image block, and an image block located around the $j^{th}$ image block.

In a possible implementation, the aggregation module 1803 is configured to perform weighted summation on the $j^{th}$ image block in the downsampled input image and the Q image blocks other than the $j^{th}$ image block in the downsampled input image to obtain the $j^{th}$ feature block in the second feature map.

In a possible implementation, the obtaining module 1805 is configured to: fuse the first feature map and the upsampled second feature map to obtain a third feature map; perform feature extraction on the third feature map to obtain a fourth feature map; and fuse the fourth feature map and the input image to obtain the output image.

In a possible implementation, the obtaining module 1805 is configured to fuse the first feature map and the upsampled second feature map to obtain the output image.

In a possible implementation, the apparatus further includes a normalization module, configured to normalize the upsampled second feature map to obtain a normalized second feature map; and the obtaining module 1805 is configured to obtain the output image based on the first feature map and the normalized second feature map.

FIG. 19 is a diagram of a structure of a model training apparatus according to an embodiment of this application. As shown in FIG. 19, the apparatus includes:

a processing module 1901, configured to process an input image by using a to-be-trained model to obtain an output image, where the to-be-trained model is configured to: perform feature extraction on the input image to obtain a first feature map, where the input image includes N image blocks, and $N \geq 2$; aggregate at least two image blocks in the input image to obtain a second feature map, where positions of the at least two image blocks are correlated; and obtain the output image based on the first feature map and the second feature map;

an obtaining module 1902, configured to obtain a target loss based on the output image and a real output image, where the target loss indicates a difference between the output image and the real output image; and

an updating module 1903, configured to update a parameter of the to-be-trained model based on the target loss until a model training condition is met, to obtain an image processing model.

In a possible implementation, the to-be-trained model is configured to aggregate an $i^{th}$ image block in the input image and M image blocks other than the $i^{th}$ image block in the input image to obtain an $i^{th}$ feature block in the second feature map, where the M image blocks include image blocks forming a preset position relationship with the $i^{th}$ image block, $N > M \geq 1$, and i = 1, ..., N.

In a possible implementation, the M image blocks include at least one of the following: an image block located in a same row as the $i^{th}$ image block, an image block located in a same column as the $i^{th}$ image block, an image block forming an oblique line with the $i^{th}$ image block, and an image block located around the $i^{th}$ image block.

In a possible implementation, the to-be-trained model is configured to perform weighted summation on the $i^{th}$ image block in the input image and the M image blocks other than the $i^{th}$ image block in the input image to obtain the $i^{th}$ feature block in the second feature map.

In a possible implementation, the to-be-trained model is configured to: fuse the first feature map and the second feature map to obtain a third feature map; perform feature extraction on the third feature map to obtain a fourth feature map; and fuse the fourth feature map and the input image to obtain the output image.

In a possible implementation, the to-be-trained model is configured to fuse the first feature map and the second feature map to obtain the output image.

In a possible implementation, the to-be-trained model is further configured to normalize the second feature map to obtain a normalized second feature map; and the to-be-trained model is configured to obtain the output image based on the first feature map and the normalized second feature map.

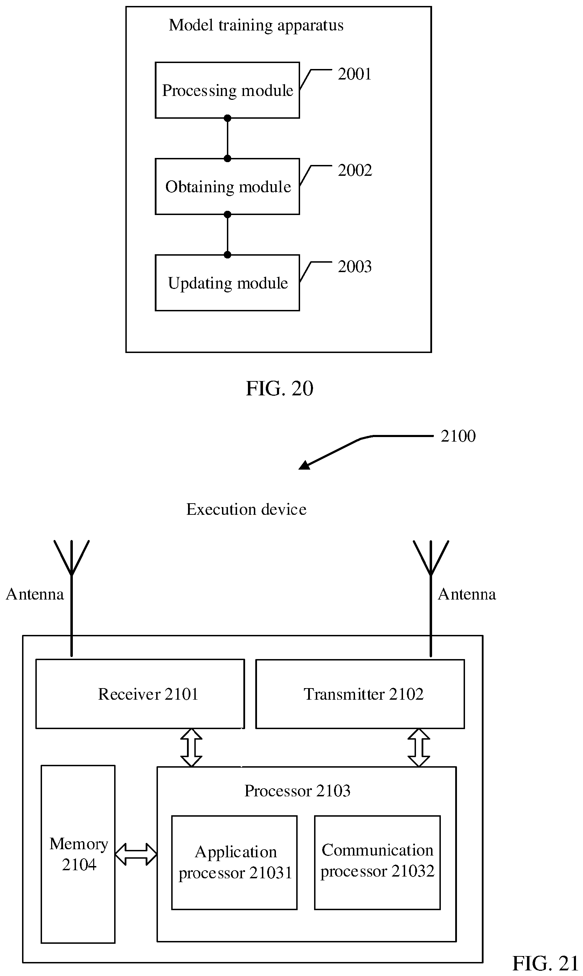

FIG. 20 is a diagram of another structure of a model training apparatus according to an embodiment of this application. As shown in FIG. 20, the apparatus includes:

a processing module 2001, configured to process an input image by using a to-be-trained model to obtain an output image, where the to-be-trained model is configured to: perform feature extraction on the input image to obtain a first feature map; perform downsampling on the input image to obtain a downsampled input image, where the downsampled input image includes P image blocks, and $P \geq 2$; aggregate at least two image blocks in the downsampled input image to obtain a second feature map, where positions of the at least two image blocks are correlated; perform upsampling on the second feature map to obtain an upsampled second feature map; and obtain the output image based on the first feature map and the upsampled second feature map;

an obtaining module 2002, configured to obtain a target loss based on the output image and a real output image, where the target loss indicates a difference between the output image and the real output image; and

an updating module 2003, configured to update a parameter of the to-be-trained model based on the target loss until a model training condition is met, to obtain an image processing model.

In a possible implementation, the to-be-trained model is configured to aggregate a $j^{th}$ image block in the downsampled input image and Q image blocks other than the $j^{th}$ image block in the downsampled input image to obtain a $j^{th}$ feature block in the second feature map, where the Q image blocks include image blocks forming a preset position relationship with the $j^{th}$ image block, $P > Q \geq 1$, and j = 1, ..., P.

In a possible implementation, the P image blocks include at least one of the following: an image block located in a same row as the $j^{th}$ image block, an image block located in a same column as the $j^{th}$ image block, an image block forming an oblique line with the $j^{th}$ image block, and an image block located around the $j^{th}$ image block.

In a possible implementation, the to-be-trained model is configured to perform weighted summation on the $j^{th}$ image block in the downsampled input image and the Q image blocks other than the $j^{th}$ image block in the downsampled input image to obtain the $j^{th}$ feature block in the second feature map.

In a possible implementation, the to-be-trained model is configured to: fuse the first feature map and the upsampled second feature map to obtain a third feature map; perform feature extraction on the third feature map to obtain a fourth feature map; and fuse the fourth feature map and the input image to obtain the output image.

In a possible implementation, the to-be-trained model is configured to fuse the first feature map and the upsampled second feature map to obtain the output image.

In a possible implementation, the to-be-trained model is further configured to normalize the upsampled second feature map to obtain a normalized second feature map; and the to-be-trained model is configured to obtain the output image based on the first feature map and the normalized second feature map.

It should be noted that, content such as information exchange between the modules/units of the apparatuses and an execution process is based on the same concept as the method embodiments of this application, and produces the same technical effect as the method embodiments of this application. For specific content, refer to the foregoing descriptions in the method embodiments of this application. Details are not described herein again.

An embodiment of this application further relates to an execution device. FIG. 21 is a diagram of a structure of an execution device according to an embodiment of this application. As shown in FIG. 21, the execution device 2100 may be specifically represented as a mobile phone, a tablet, a notebook computer, an intelligent wearable device, a server, or the like. This is not limited herein. The image processing apparatus described in the embodiment corresponding to FIG. 17 or FIG. 18 may be deployed on the execution device 2100, and is configured to implement an image processing function in the embodiment corresponding to FIG. 5 or FIG. 13. Specifically, the execution device 2100 includes a receiver 2101, a transmitter 2102, a processor 2103, and a memory 2104 (the execution device 2100 may include one or more processors 2103, and one processor is used as an example in FIG. 21). The processor 2103 may include an application processor 21031 and a communication processor 21032. In some embodiments of this application, the receiver 2101, the transmitter 2102, the processor 2103, and the memory 2104 may be connected by using a bus or in another manner.

The memory 2104 may include a read-only memory and a random access memory, and provide instructions and data for the processor 2103. A part of the memory 2104 may further include a non-volatile random access memory (non-volatile random access memory, NVRAM). The memory 2104 stores a processor and operation instructions, an executable module or a data structure, or a subset thereof, or an extended set thereof. The operation instructions may include various operation instructions used to implement various operations.

The processor 2103 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in embodiments of this application may be applied to the processor 2103, or may be implemented by the processor 2103. The processor 2103 may be an integrated circuit chip with a signal processing capability. In an implementation process, steps in the foregoing methods can be completed by using a hardware integrated logic circuit in the processor 2103, or by using instructions in a form of software. The processor 2103 may be a general-purpose processor, a digital signal processor (digital signal processor, DSP), a microprocessor, or a microcontroller. The processor 2103 may further include an application-specific integrated circuit (application-specific integrated circuit, ASIC), a field-programmable gate array (field-programmable gate array, FPGA) or another programmable logic device, a discrete gate or a transistor logic device, or a discrete hardware component. The processor 2103 may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 2104. The processor 2103 reads information in the memory 2104 and completes the steps in the foregoing methods in combination with hardware of the processor 2103.

The receiver 2101 may be configured to receive input digit or character information, and generate a signal input related to a related setting and function control of the execution device. The transmitter 2102 may be configured to output digit or character information through a first interface. The transmitter 2102 may be further configured to send instructions to a disk group through the first interface, to modify data in the disk group. The transmitter 2102 may further include a display device such as a display screen.

In this embodiment of this application, in one case, the processor 2103 is configured to process an input image by using the image processing model in the embodiment corresponding to FIG. 4 or FIG. 12.

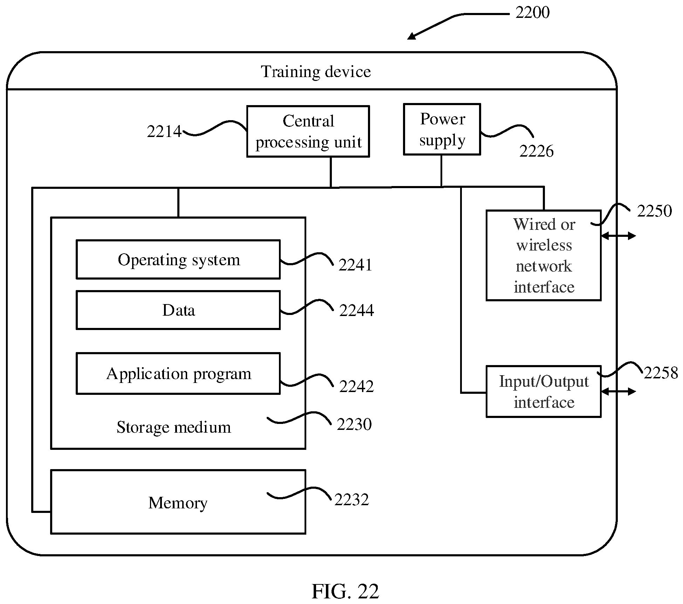

An embodiment of this application further relates to a training device. FIG. 22 is a diagram of a structure of a training device according to an embodiment of this application. As shown in FIG. 22, the training device 2200 is implemented by one or more servers. The training device 2200 may vary greatly due to different configurations or performance, and may include one or more central processing units (central processing units, CPU) 2214 (for example, one or more processors) and a memory 2232, and one or more storage media 2230 (for example, one or more mass storage devices) that store an application program 2242 or data 2244. The memory 2232 and the storage medium 2230 may be transitory storage or persistent storage. The program stored in the storage medium 2230 may include one or more modules (not shown in the figure), and each module may include a series of instructions for performing operations on the training device. Further, the central processing unit 2214 may be configured to communicate with the storage medium 2230, and perform operations on the training device 2200 by using the series of instructions in the storage medium 2230.

The training device 2200 may further include one or more power supplies 2226, one or more wired or wireless network interfaces 2250, one or more input/output interfaces 2258, or one or more operating systems 2241, for example, Windows Server™, Mac OS X™, Unix™, Linux™, or FreeBSD™.

Specifically, the training device may perform the model training method in the embodiment corresponding to FIG. 15 or FIG. 16.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in embodiments, or a chip in the training device performs the data processing method described in embodiments. Optionally, the storage unit is an on-chip storage unit, for example, a register or a buffer. Alternatively, the storage unit may be an off-chip storage unit in a wireless access device, for example, a read-only memory (read-only memory, ROM) or another type of static storage device that can store static information and instructions, or a random access memory (random access memory, RAM).

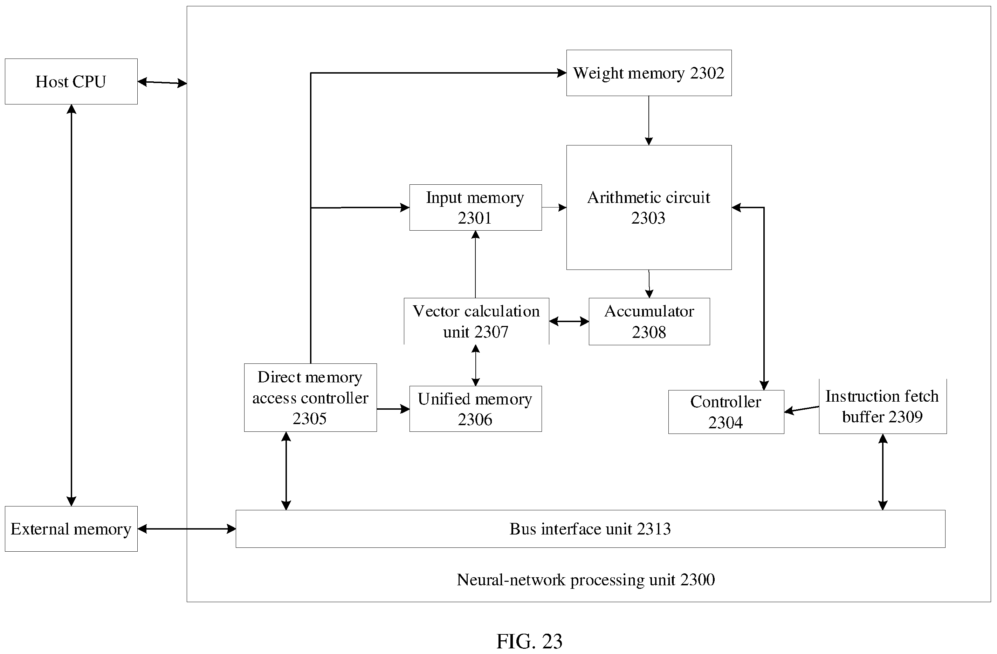

Specifically, FIG. 23 is a diagram of a structure of a chip according to an embodiment of this application. The chip may be represented as a neural-network processing unit NPU 2300. The NPU 2300 is mounted to a host CPU (Host CPU) as a coprocessor, and the host CPU assigns a task. A core part of the NPU is an arithmetic circuit 2303. A controller 2304 may control the arithmetic circuit 2303 to extract matrix data in a memory and perform a multiplication operation.

In some implementations, the arithmetic circuit 2303 internally includes a plurality of processing units (Process Engine, PE). In some implementations, the arithmetic circuit 2303 is a two-dimensional systolic array. The arithmetic circuit 2303 may alternatively be a one-dimensional systolic array or another electronic circuit capable of performing mathematical operations such as multiplication and addition. In some implementations, the arithmetic circuit 2303 is a general-purpose matrix processor.

For example, it is assumed that there is an input matrix A, a weight matrix B, and an output matrix C. The arithmetic circuit fetches data corresponding to the matrix B from a weight memory 2302 and buffers the data on each PE in the arithmetic circuit. The arithmetic circuit fetches data of the matrix A from an input memory 2301, performs a matrix operation with the matrix B, and stores a partial result or final result of a resulting matrix in an accumulator (accumulator) 2308.

A unified memory 2306 is configured to store input data and output data. Weight data is directly transferred to the weight memory 2302 by using a direct memory access controller (Direct Memory Access Controller, DMAC) 2305. The input data is also transferred to the unified memory 2306 by using the DMAC.

BIU is an acronym for bus interface unit. A bus interface unit 2313 is configured to perform interaction between an AXI bus and the DMAC and interaction between the AXI bus and an instruction fetch buffer (Instruction Fetch Buffer, IFB) 2309.

The bus interface unit 2313 (Bus Interface Unit, BIU for short) is used by an instruction fetch buffer 2309 to obtain an instruction from an external memory, and further used by the direct memory access controller 2305 to obtain raw data of the input matrix A or the weight matrix B from the external memory.

The DMAC is mainly configured to transfer input data in the external memory DDR to the unified memory 2306, transfer weight data to the weight memory 2302, or transfer input data to the input memory 2301.

A vector calculation unit 2307 includes a plurality of arithmetic processing units. When necessary, the vector calculation unit 2307 performs further processing such as vector multiplication, vector addition, an exponential operation, a logarithmic operation, or value comparison on an output of the arithmetic circuit 2303. The vector calculation unit 2307 is mainly configured to perform network calculation at a non-convolutional or non-fully connected layer in a neural network, for example, batch normalization (batch normalization), pixel-level summation, or upsampling of a predicted label plane.

In some implementations, the vector calculation unit 2307 can store a processed output vector in the unified memory 2306. For example, the vector calculation unit 2307 may apply a linear function or a nonlinear function to the output of the arithmetic circuit 2303. For example, linear interpolation is performed on a predicted label plane extracted at a convolutional layer. For another example, an accumulated-value vector is used to generate an activation value. In some implementations, the vector calculation unit 2307 generates a normalized value, a value obtained through pixel-level summation, or a combination thereof. In some implementations, the processed output vector can be used as an activation input to the arithmetic circuit 2303. For example, the processed output vector can be used at a subsequent layer of the neural network.

The instruction fetch buffer (instruction fetch buffer) 2309 connected to the controller 2304 is configured to store an instruction used by the controller 2304.

All of the unified memory 2306, the input memory 2301, the weight memory 2302, and the instruction fetch buffer 2309 are on-chip memories. The external memory is private to a hardware architecture of the NPU.

Any one of the foregoing processors may be a general-purpose central processing unit, a microprocessor, an ASIC, or one or more integrated circuits for controlling program execution.

In addition, it should be noted that the apparatus embodiments described above are merely examples. The units described as separate parts may or may not be physically separate, and parts displayed as units may or may not be physical units, may be located in one position, or may be distributed on a plurality of network units. Some or all of the modules may be selected based on an actual requirement to achieve the objectives of the solutions in the embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or may certainly be implemented by dedicated hardware, including an application-specific integrated circuit, a dedicated CPU, a dedicated memory, a dedicated component, and the like. Generally, any function that can be performed by a computer program can be easily implemented by using corresponding hardware. Moreover, a specific hardware structure used to implement a same function may be in various forms, for example, in a form of an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in the embodiments of this application.

All or some of the foregoing embodiments may be implemented by software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from one website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. An image processing method, wherein the method is implemented by using an image processing model, and the method comprises:

   performing feature extraction on an input image to obtain a first feature map, wherein the input image comprises N image blocks, and $N \geq 2$;
   aggregating at least two image blocks in the input image to obtain a second feature map, wherein positions of the at least two image blocks are correlated; and
   obtaining an output image based on the first feature map and the second feature map.

2. The method according to claim 1, wherein the aggregating at least two image blocks in the input image to obtain a second feature map comprises:
   aggregating an $i^{th}$ image block in the input image and M image blocks other than the $i^{th}$ image block in the input image to obtain an $i^{th}$ feature block in the second feature map, wherein the M image blocks comprise image blocks forming a preset position relationship with the $i^{th}$ image block, $N > M \geq 1$, and i = 1, ..., N.

3. The method according to claim 2, wherein the M image blocks comprise at least one of the following:
   an image block located in a same row as the $i^{th}$ image block, an image block located in a same column as the $i^{th}$ image block, an image block forming an oblique line with the $i^{th}$ image block, and an image block located around the $i^{th}$ image block.

4. The method according to claim 2 or 3, wherein the aggregating an $i^{th}$ image block in the input image and M image blocks other than the $i^{th}$ image block in the input image to obtain an $i^{th}$ feature block in the second feature map comprises:
   performing weighted summation on the $i^{th}$ image block in the input image and the M image blocks other than the $i^{th}$ image block in the input image to obtain the $i^{th}$ feature block in the second feature map.

5. The method according to any one of claims 1 to 4, wherein the obtaining an output image based on the first feature map and the second feature map comprises:

   fusing the first feature map and the second feature map to obtain a third feature map;
   performing feature extraction on the third feature map to obtain a fourth feature map; and
   fusing the fourth feature map and the input image to obtain the output image.

6. The method according to any one of claims 1 to 4, wherein the obtaining an output image based on the first feature map and the second feature map comprises:
   fusing the first feature map and the second feature map to obtain the output image.

7. The method according to any one of claims 1 to 6, wherein before the obtaining an output image based on the first feature map and the second feature map, the method further comprises:

   normalizing the second feature map to obtain a normalized second feature map; and
   the obtaining an output image based on the first feature map and the second feature map comprises:
   obtaining the output image based on the first feature map and the normalized second feature map.

8. The method according to any one of claims 1 to 7, wherein the input image is a raw to-be-processed image, or the input image is a feature map obtained after feature extraction is performed on the to-be-processed image.

9. An image processing method, wherein the method is implemented by using an image processing model, and the method comprises:

   performing feature extraction on an input image to obtain a first feature map;
   performing downsampling on the input image to obtain a downsampled input image, wherein the downsampled input image comprises P image blocks, and $P \geq 2$;
   aggregating at least two image blocks in the downsampled input image to obtain a second feature map, wherein positions of the at least two image blocks are correlated;
   performing upsampling on the second feature map to obtain an upsampled second feature map; and
   obtaining an output image based on the first feature map and the upsampled second feature map.

10. A model training method, wherein the method comprises:

   processing an input image by using a to-be-trained model to obtain an output image, wherein the to-be-trained model is configured to: perform feature extraction on the input image to obtain a first feature map, wherein the input image comprises N image blocks, and $N \geq 2$; aggregate at least two image blocks in the input image to obtain a second feature map, wherein positions of the at least two image blocks are correlated; and obtain the output image based on the first feature map and the second feature map;
   obtaining a target loss based on the output image and a real output image, wherein the target loss indicates a difference between the output image and the real output image; and
   updating a parameter of the to-be-trained model based on the target loss until a model training condition is met, to obtain an image processing model.

11. A model training method, wherein the method comprises:

   processing an input image by using a to-be-trained model to obtain an output image, wherein the to-be-trained model is configured to: perform feature extraction on the input image to obtain a first feature map; perform downsampling on the input image to obtain a downsampled input image, wherein the downsampled input image comprises P image blocks, and $P \geq 2$; aggregate at least two image blocks in the downsampled input image to obtain a second feature map, wherein positions of the at least two image blocks are correlated; perform upsampling on the second feature map to obtain an upsampled second feature map; and obtain the output image based on the first feature map and the upsampled second feature map;

obtaining a target loss based on the output image and a real output image, wherein the target loss indicates a difference between the output image and the real output image; and

updating a parameter of the to-be-trained model based on the target loss until a model training condition is met, to obtain an image processing model.

12. An image processing apparatus, wherein the apparatus comprises:

a feature extraction module, configured to perform feature extraction on an input image to obtain a first feature map, wherein the input image comprises N image blocks, and $N \geq 2$;

an aggregation module, configured to aggregate at least two image blocks in the input image to obtain a second feature map, wherein positions of the at least two image blocks are correlated; and

an obtaining module, configured to obtain an output image based on the first feature map and the second feature map.

13. An image processing apparatus, wherein the apparatus comprises:

a feature extraction module, configured to perform feature extraction on an input image to obtain a first feature map;

a downsampling module, configured to perform downsampling on the input image to obtain a downsampled input image, wherein the downsampled input image comprises P image blocks, and $P \geq 2$;

an aggregation module, configured to aggregate at least two image blocks in the downsampled input image to obtain a second feature map, wherein positions of the at least two image blocks are correlated;

an upsampling module, configured to perform upsampling on the second feature map to obtain an upsampled second feature map; and

an obtaining module, configured to obtain an output image based on the first feature map and the upsampled second feature map.

14. A model training apparatus, wherein the apparatus comprises:

a processing module, configured to process an input image by using a to-be-trained model to obtain an output image, wherein the to-be-trained model is configured to: perform feature extraction on the input image to obtain a first feature map, wherein the input image comprises N image blocks, and $N \geq 2$; aggregate at least two image blocks in the input image to obtain a second feature map, wherein positions of the at least two image blocks are correlated; and obtain the output image based on the first feature map and the second feature map;

an obtaining module, configured to obtain a target loss based on the output image and a real output image, wherein the target loss indicates a difference between the output image and the real output image; and

an updating module, configured to update a parameter of the to-be-trained model based on the target loss until a model training condition is met, to obtain an image processing model.

15. A model training apparatus, wherein the apparatus comprises:

a processing module, configured to process an input image by using a to-be-trained model to obtain an output image, wherein the to-be-trained model is configured to: perform feature extraction on the input image to obtain a first feature map; aggregate at least two image blocks in the downsampled input image to obtain a second feature map, wherein positions of the at least two image blocks are correlated; perform upsampling on the second feature map to obtain an upsampled second feature map; and obtain the output image based on the first feature map and the upsampled second feature map;

an obtaining module, configured to obtain a target loss based on the output image and a real output image, wherein the target loss indicates a difference between the output image and the real output image; and

an updating module, configured to update a parameter of the to-be-trained model based on the target loss until a model training condition is met, to obtain an image processing model.

16. An image processing apparatus, wherein the apparatus comprises a memory and a processor, the memory stores code, the processor is configured to execute the code, and when the code is executed, the image processing apparatus performs the method according to any one of claims 1 to 11.

17. A computer storage medium, wherein the computer storage medium stores one or more instructions, and when the instruction is executed by one or more computers, the one or more computers are enabled to implement the method according to any one of claims 1 to 11.

18. A computer program product, wherein the computer program product stores instructions, and when the instructions are executed by a computer, the computer is enabled to implement the method according to any one of claims 1 to 11.

Intelligent information chain

Intelligent product and industry application

| Translation, text analysis, ... | Speech, vision, image, ... |
|---|---|

| Data | Data processing: | Data training, machine learning, or deep learning | Search, inference, or decision-making | ... |

| Infrastructure | Sensor | Intelligent chip | Basic platform | ... |

IT value chain

FIG. 1

EP 4 579 607 A1

Interaction interface

To-be-processed image

Processed image

Memory

Processor

Data training, machine learning, or deep learning

Search, inference, or decision-making

...

Data processing device (server)

13:21

FIG. 2a

| User | Intelligent terminal |
|------|---------------------|

13:21

Interaction interface

To-be-processed image | Processed image

Memory

Processor: | Data training, machine learning, or deep learning | Search, inference, or decision-making | ...

Intelligent terminal

FIG. 2b

300

Data storage
system 250

Execution device 210

...

Communication
network

Local device
301

Local device
302

Example

FIG. 2c

FIG. 3

Output
image

Image processing model

Fusion module

Long attention
mechanism
module

Feature extraction module

Directional long
attention unit

...

Directional long
attention unit

Directional long
attention unit

Output
image

FIG. 4

Perform feature extraction on an input image to obtain a
first feature map, where the input image includes N image
blocks, and N ≥ 2

501

Aggregate at least two image blocks in the input image to
obtain a second feature map, where positions of the at least
two image blocks are correlated

502

Obtain an output image based on the first feature map and
the second feature map

503

FIG. 5

Selected image
block

FIG. 6

**Selected image block**

FIG. 7

**Selected image block**

FIG. 8a

**Selected image block**

FIG. 8b

Input image     Intermediate feature map     Second feature map

FIG. 9

Normalized
second feature map

Long attention
mechanism module

Directional long attention unit

Directional long attention unit

...

Directional long attention unit

Directional long attention unit

Input image

FIG. 10

Output image

Fusion module

Fusion unit

Input
image

Feature extraction unit

Fusion unit

First feature map

Second feature map

FIG. 11

FIG. 12

Perform feature extraction on an input image to obtain a first feature map ⟍ 1301

Perform downsampling on the input image to obtain a downsampled input image, where the downsampled input image includes P image blocks, and $P \geq 2$ ⟍ 1302

Aggregate at least two images in the downsampled input image to obtain a second feature map, where positions of the at least two images in the input image are correlated ⟍ 1303

Perform upsampling on the second feature map to obtain an upsampled second feature map ⟍ 1304

Obtain an output image based on the first feature map and the upsampled second feature map ⟍ 1305

FIG. 13

Normalized second
feature map

Long attention
mechanism module

Upsampling unit

Upsampling unit

Directional long attention
unit

...

Directional long attention
unit

Directional long attention
unit

Downsampling unit

Input image

FIG. 14

Process an input image by using a to-be-trained model to obtain an output image, where the to-be-trained model is configured to: perform feature extraction on the input image to obtain a first feature map, where the input image includes N image blocks, and $N \geq 2$; aggregate at least two image blocks in the input image to obtain a second feature map, where positions of the at least two image blocks are correlated; and obtain the output image based on the first feature map and the second feature map

1501

Obtain a target loss based on the output image and a real output image, where the target loss indicates a difference between the output image and the real output image

1502

Update a parameter of the to-be-trained model based on the target loss until a model training condition is met, to obtain an image processing model

1503

FIG. 15

Process an input image by using a to-be-trained model to obtain an output image, where the to-be-trained model is configured to: perform feature extraction on the input image to obtain a first feature map; perform downsampling on the input image to obtain a downsampled input image, where the downsampled input image includes P image blocks, and P ≥ 2; aggregate at least two image blocks in the downsampled input image to obtain a second feature map, where positions of the at least two image blocks are correlated; perform upsampling on the second feature map to obtain an upsampled second feature map; and obtain the output image based on the first feature map and the upsampled second feature map

1601

Obtain a target loss based on the output image and a real output image, where the target loss indicates a difference between the output image and the real output image

1602

Update a parameter of the to-be-trained model based on the target loss until a model training condition is met, to obtain an image processing model

1603

FIG. 16

Image processing apparatus

Feature extraction module — 1701

Aggregation module — 1702

Obtaining module — 1703

FIG. 17

Image processing apparatus

Feature extraction module —— 1801

Downsampling module —— 1802

Aggregation module —— 1803

Upsampling module —— 1804

Obtaining module —— 1805

FIG. 18

Model training apparatus

Processing module —— 1901

Obtaining module —— 1902

Updating module —— 1903

FIG. 19

Model training apparatus

Processing module — 2001

Obtaining module — 2002

Updating module — 2003

FIG. 20

— 2100

Execution device

Antenna

Antenna

Receiver 2101

Transmitter 2102

Processor 2103

Memory 2104

Application processor 21031

Communication processor 21032

FIG. 21

2200

Training device

2214 — Central processing unit

Power supply 2226

2250 — Wired or wireless network interface

Operating system 2241

Data 2244

Application program 2242

Storage medium 2230

Input/Output interface 2258

Memory 2232

FIG. 22

FIG. 23

## INTERNATIONAL SEARCH REPORT

| International application No. |
| --- |
| **PCT/CN2023/119076** |

| A. | CLASSIFICATION OF SUBJECT MATTER |
| --- | --- |

G06V10/40(2022.01)i

According to International Patent Classification (IPC) or to both national classification and IPC

| B. | FIELDS SEARCHED |
| --- | --- |

Minimum documentation searched (classification system followed by classification symbols)

IPC: G06V、G06T、G06K9/-

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE: 图像块, 分块, 网格, 区域, 超像素, 位置, 空间, 关联, 相邻, 周围, 特征, 聚合, 求和, 拼接, 融合, 神经网络, 轻量, image block, block, gridding, region, superpixel, location, position, space, relevance, correlation, relate, adjacent, adjoin, around, feature, characteristic, aggregation, sum, joint, fusion, neural network, lightweight

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 113065576 A (HUAWEI TECHNOLOGIES CO., LTD.) 02 July 2021 (2021-07-02) description, paragraphs 0058-0190 | 1-18 |
| A | CN 111104962 A (BEIHANG UNIVERSITY QINGDAO RESEARCH INSTITUTE) 05 May 2020 (2020-05-05) entire document | 1-18 |
| A | CN 112767385 A (TIANJIN UNIVERSITY) 07 May 2021 (2021-05-07) entire document | 1-18 |
| A | CN 114359289 A (HUAWEI TECHNOLOGIES CO., LTD. et al.) 15 April 2022 (2022-04-15) entire document | 1-18 |
| A | CN 114821096 A (HUAWEI TECHNOLOGIES CO., LTD.) 29 July 2022 (2022-07-29) entire document | 1-18 |
| A | CN 115082743 A (ZHEJIANG LAB) 20 September 2022 (2022-09-20) entire document | 1-18 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 November 2023** | **23 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/119076** |

### C. DOCUMENTS CONSIDERED TO BE RELEVANT

| Category* | Citation of document, with indication, where appropriate, of the relevant passages | Relevant to claim No. |
| --- | --- | --- |
| A | US 2022075994 A1 (SAMSUNG ELECTRONICS CO., LTD.) 10 March 2022 (2022-03-10) entire document | 1-18 |

Form PCT/ISA/210 (second sheet) (July 2022)

**INTERNATIONAL SEARCH REPORT**
Information on patent family members

International application No.

**PCT/CN2023/119076**

| Patent document cited in search report | | | Publication date (day/month/year) | Patent family member(s) | | | Publication date (day/month/year) |
|---|---|---|---|---|---|---|---|
| CN | 113065576 | A | 02 July 2021 | WO | 2022179587 | A1 | 01 September 2022 |
| CN | 111104962 | A | 05 May 2020 | CN | 111104962 | B | 18 April 2023 |
| CN | 112767385 | A | 07 May 2021 | CN | 112767385 | B | 17 May 2022 |
| CN | 114359289 | A | 15 April 2022 | | None | | |
| CN | 114821096 | A | 29 July 2022 | | None | | |
| CN | 115082743 | A | 20 September 2022 | CN | 115082743 | B | 06 December 2022 |
| | | | | JP | 7312510 | B1 | 21 July 2023 |
| US | 2022075994 | A1 | 10 March 2022 | KR | 20220033007 | A | 15 March 2022 |
| | | | | US | 11574500 | B2 | 07 February 2023 |

Form PCT/ISA/210 (patent family annex) (July 2022)

**REFERENCES CITED IN THE DESCRIPTION**

**Patent documents cited in the description**

- CN 202211152658